# EUROPÄISCHE PATENTSCHRIFT

(11) **EP 4 321 226 B1**
(45) Veröffentlichungstag und Bekanntmachung des Hinweises auf die Patenterteilung: **30.09.2026**
(21) Anmeldenummer: 23184632.0
(22) Anmeldetag: 11.07.2023
(51) Int. Cl.: A63B 22/02, A63B 24/00, G01P 3/68, G06T 7/246, G06V 40/20

(54) **LAUFBANDSYSTEM UND BAUSATZ**
TREADMILL SYSTEM AND KIT
SYSTÈME DE TAPIS ROULANT ET KIT

(30) Priorität: 10.08.2022 DE 102022120173
(43) Veröffentlichungstag der Anmeldung: 14.02.2024
(73) Patentinhaber: Centigrade GmbH, 66123 Saarbrücken (DE)
(72) Erfinder: Immich, Thomas, 66111 Saarbrücken (DE); Frieß-Hergenröder, Frederic, 64342 Seeheim-Jungenheim (DE)
(74) Vertreter: Zeiner, Johannes Michael

(56) Entgegenhaltungen:
- EP-B1- 3 550 404
- DE-A1- 102019 124 116
- DE-U1- 202004 007 622
- US-A1- 2021 106 899

## Beschreibung

Die vorliegende Erfindung betrifft einen Bausatz zum Aufrüsten eines Laufbandes zu einem Laufbandsystem.

Aus dem Stand der Technik bekannte Laufbänder weisen eine Laufbandoberfläche auf, auf der ein Benutzer (beziehungsweise eine Benutzerin) laufen oder gehen oder sich anders zu Fuß im Bezugssystem der Laufbandoberfläche fortbewegen kann. Die Laufbandoberfläche kann dabei beispielsweise eine Außenoberfläche eines Endlosbandes sein, welches über mindestens zwei Umlenkrollen derart umlaufend gelagert ist, dass die Laufbandoberfläche (im Bezugssystem der Umgebung des Laufbandes) an einer vom Benutzer betretenen Lauffläche (Oberseite des Laufbandes) entgegengesetzt zur Laufrichtung des Benutzers unter dem Benutzer hindurch läuft. Die Fortbewegungsgeschwindigkeit (vereinfacht "Gehgeschwindigkeit" oder "Laufgeschwindigkeit") des Benutzers entspricht somit im Wesentlichen der Geschwindigkeit der Laufbandoberfläche an der Lauffläche.

Ein Beispiel für ein Laufband ist in dem Dokument EP 3 578 085 A1 beschrieben. Dieses Laufband ist im Fußbereich einer Arbeitsplatzanordnung positioniert und wird ausschließlich passiv durch die Gehbewegung des Benutzers angetrieben. Um eine hohe Profilierung der Lauffläche zu erreichen, wird das Laufband von mehreren quer zur Laufrichtung verlaufenden Holzlamellen gebildet. Die Enden der Holzlamellen sind jeweils an einem linken und einem rechten Führungsband befestigt, wobei die beiden Führungsbänder ihrerseits dann zirkular umlaufend auf der linken und der rechten Seite des Gestells gelagert sind, um eine unerwünschte Geräuschentwicklung beim Antrieb des Laufbands durch den Benutzer zu reduzieren.

Das Dokument EP 3 550 404 B1 offenbart ein Laufband, auf dessen Endlosband Markierungen derart in Umlaufrichtung angebracht sind, dass in jeder Stellung des Endlosbandes mindestens eine Markierung auf der Oberseite der Laufbandbasis freiliegt. Jede der Markierungen ist ein sichtbares Licht oder Infrarot-Licht emittierendes Element oder eine sichtbare Markierung, die als vorhandenes Bildmuster ausgebildet ist. Darüber hinaus sind die Kameras quer rückseitig zur Rechten und Linken des Laufbandes angebracht. Bei dem lichtemittierenden Element handelt es sich um einen aktiven Marker.

Das Dokument DE 10 2019 124116 A1 beschreibt ein Laufband-Trainingssystem, bei dem einen eingestellten Geschwindigkeitswert des Laufbandes charakterisierende Signale zu einer Verarbeitungs- und Steuereinheit gelangen, um dort zur Synchronisation einer bildlichen Darstellung auf der Lauffläche mittels eines Projektors zu dienen, die aus vorgespeicherten Bildelementen und/oder Bildfolgen generiert wird. Die bildliche Darstellung wird anhand der Geschwindigkeitssignale derart gesteuert, dass dem Nutzer eine stimmige Simulation einer Laufumgebung, verknüpft mit der Einblendung von mit den Füßen zu treffenden Markierungen und/oder mit der Simulation von zu überwindenden oder zu vermeidenden Hindernissen, präsentiert wird. Um Bewegungsinformationen über den Benutzer, beispielsweise eine Schrittzahl oder eine Fortbewegungsgeschwindigkeit, zu messen, ist außerdem bekannt, einen in das Laufband integrierten mechanischen Sensor oder ein externes digitales Drittgerät wie beispielsweise ein Fitnessarmband oder eine Smartwatch zu verwenden. Diese digitalen Drittgeräte basieren in der Regel auf einem Beschleunigungssensor, der hohe Ausschläge in den Beschleunigungsamplituden als menschliche Schrittwechsel interpretieren.

Aus dem Dokument US 2021/0106899 A1 ist ein Bausatz für ein Trainingsgerät bekannt, das eine Basiseinheit mit einem modularem Anschluss und eine an dem modularen Anschluss physisch mit der Basiseinheit verbindbare modulare Einheit umfasst, wobei die modulare Einheit ein Trainingsmerkmal aufweist, das nicht in der Basiseinheit enthalten ist. In einer Ausführungsform wird ein Positionssensor in Form einer Kamera verwendet, um Bilder von einem eine Übung ausführenden Benutzer zu erfassen. Basierend auf Pixelabweichungen in verschiedenen von der Kamera erfassten Bildern kann ein Prozessor die Position des Benutzers bestimmen, wobei der Prozessor per Analyse der Position des Benutzers die Anzahl der Wiederholungen einer Übung zählen kann. Ferner ist in dem Dokument US 2021/0106899 A1 ein modulares Laufband offenbart, welches ein Basis-Laufband umfasst, das eine Basisplattform, eine vordere Rolle, eine hintere Rolle sowie einen Laufbandgurt umfasst, der von der vorderen Rolle zur hinteren Rolle um die Basisplattform gewickelt ist.

Vor diesem Hintergrund ist es eine Aufgabe der vorliegenden Erfindung, einen relativ einfach und kosteneffizient herstellbaren Bausatz bereitzustellen, bei dem sich benutzerspezifische Bewegungsinformationen zuverlässig und komfortabel ermitteln lassen.

Diese Aufgabe wird durch einen Bausatz gemäß Anspruch 1 gelöst.

Ein hier offenbartes Laufbandsystem umfasst ein Laufband mit einer zum Betreten durch einen Benutzer vorgesehenen Laufbandoberfläche, auf der optische Markierungen ausgebildet sind, eine Kameraeinrichtung mit mindestens einer Kamera, wobei die Kameraeinrichtung dazu eingerichtet ist, eine zeitliche Bildfolge mit mehreren Bildern von mindestens einem Teil der Laufbandoberfläche unter Erfassung der Markierungen zu gewinnen, und eine Steuereinrichtung, die dazu eingerichtet ist, die Bildfolge von der Kameraeinrichtung zu erhalten, auf Basis der Bildfolge mindestens eine Bewegungsinformation des sich unter Betreten der Laufbandoberfläche auf dem Laufband fortbewegenden Benutzers zu ermitteln, und eine Steuerfunktion auf Basis der Bewegungsinformation auszuführen. Die Steuerfunktion kann vorzugsweise mit der Ausgabe eines Steuersignals an eine weitere Komponente des Laufbandsystems einhergehen.

Dies ermöglicht, die mindestens eine Bewegungsinformation (d.h., die eine Bewegungsinformation oder die mehreren Bewegungsinformationen) auf elegante Art und Weise zu erlangen, um die Steuerfunktion der Steuereinrichtung zuverlässig ausführen zu können. Insbesondere kann erfindungsgemäß auf vom Benutzer getragene Sensoren (beispielsweise in Drittgeräten wie sogenannten Wearables, z.B. in Form von Fitness-Armbändern) verzichtet werden. Stattdessen kann das Laufbandsystem für sich im Hinblick auf die Gewinnung der mindestens einen Bewegungsinformation (beispielsweise einer Fortbewegungsgeschwindigkeit (sog. Geh- oder Laufgeschwindigkeit) des Benutzers) im Wesentlichen autark sein. Auf diese Weise lässt sich der Komfort für den Benutzer erhöhen. Darüber hinaus ist das Laufbandsystem vergleichsweise einfach und kosteneffizient herstellbar. Ferner können vorhandene oder vorgefertigte Laufbänder recht unkompliziert um die Kameraeinrichtung und die Steuereinrichtung aufgerüstet werden, um die Bewegungsinformation zu gewinnen. Insbesondere ist zum genannten Zweck kein Umbau an der Mechanik des Laufbandes erforderlich.

Das Laufband kann grundsätzlich als unidirektionales oder omnidirektionales Laufband ausgebildet sein. Unidirektionale Laufbänder zeichnen sich dadurch aus, das die Laufbandoberfläche an der Lauffläche in einer Längsrichtung parallel (bei Laufbändern ohne Rücklaufsperre auch antiparallel) zu einer Achse (der sogenannten Längsachse des Laufbandes) beweglich ist. Bei omnidirektionalen Laufbändern ist die Laufbandoberfläche an der Lauffläche hingegen in mehrere Richtungen (zweidimensional) beweglich. Die Lauffläche ist im Kontext dieser Offenbarung gemäß der begrifflichen Verwendung auf dem Gebiet von Laufbändern die zum Betreten durch den Benutzer bei bestimmungsgemäßer Verwendung vorgesehene Oberfläche an der Oberseite des Laufbandes. Somit ist die Lauffläche im Bezugssystem der Umgebung des Laufbandes insbesondere während der Benutzung stationär. Die Laufbandoberfläche rotiert dagegen im Bezugssystem der Umgebung, wobei sich während dieses Rotierens ein die Lauffläche bildender Teil der Laufbandoberfläche während der Fortbewegung des Benutzers kontinuierlich ändert. Der Begriff "Fortbewegung" (sowie Fortbewegungsgeschwindigkeit, etc.) bezieht sich im Kontext der vorliegenden Offenbarung auf eine Fortbewegung des Benutzers zu Fuß, insbesondere auf Laufen, Gehen, Schlendern, Schleichen, Hopsen, etc., über die sich an der Oberseite des Laufbandes entgegengesetzt zur Fortbewegungsrichtung bewegende Laufbandoberfläche.

Die Markierungen sind vorzugsweise als Infrarotmarker ("Reflexionsmarker") ausgebildet. Sie können sich dadurch auszeichnen, dass sie (für das menschliche Auge unsichtbare) Infrarotstrahlung (umgangssprachlich "Infrarotlicht") besser reflektieren als der sie umgebende Teil der Laufbandoberfläche, d.h., dass ein Kontrast zwischen den Infrarotmarkern und dem Hintergrund der Markierungen für an der Laufbandoberfläche reflektierte Infrarotstrahlung größer als für sichtbares Licht ist. Mit anderen Worten reflektieren die Markierungen Infrarotstrahlung (umgangssprachlich "Infrarotlicht") stärker als der sie umgebende Teil der Laufbandoberfläche, d.h., dass ein Kontrast zwischen den Markern und der Laufbandoberfläche entsteht. Entsprechend ist die (mindestens eine) Kamera bevorzugt als Infrarotkamera ausgebildet. Um den genannten Kontrast bei der Bildgebung mittels der Kameraeinrichtung weiter zu verbessern, kann die Kameraeinrichtung ferner eine Infrarotleuchte aufweisen, die dazu angeordnet ist, mindestens den Teil der Laufbandoberfläche anzustrahlen. Dadurch kann der Einsatz des Laufbandes inklusive relativ stabiler und korrekter Messung in vielfältigen (vorzugsweise allen erdenklichen) Beleuchtungssituationen, beispielsweise auch in der (theoretischen) absoluten Dunkelheit oder Taghelligkeit, ermöglich werden. Ferner ist es denkbar, dass das Laufbandsystem so ausgestaltet werden kann, dass das komplette Laufband reflektiert und die Marker nicht. Dadurch können sich die Füße über selbiges Prinzip besser absetzen.

Die Laufbandoberfläche kann eine Außenoberfläche eines Endlosbandes sein, welches über mindestens zwei Umlenkrollen umlaufend gelagert ist. Das Endlosband kann als elastisches Band ausgebildet sein oder mehrere über die Umlenkrollen umgelenkte, elastische Stützbänder aufweisen, an denen die Laufbandoberfläche bildende Lamellen gelagert sind. Die Markierungen können in die Laufbandoberfläche integriert oder beispielsweise auf die Laufbandoberfläche aufgebracht, z.B. aufgeklebt, sein. In einer unten näher erläuterten Variante sind die (mehreren) Markierungen zusammen auf einer Matte vorgesehen, welche an das Laufband anbringbar ist. Bei Lamellen-basierten Laufbändern, können die Lamellen auch direkt bei der Produktion des Laufbandes mit entsprechenden Markierungen ausgestattet werden. Die Markierungen bilden vorzugsweise zusammen ein Muster auf der Laufbandoberfläche aus, welches vorteilhafterweise in der Längsrichtung der Laufbandoberfläche periodisch ist.

Gemäß dem Muster können die Markierungen derart angeordnet sein, dass sie mindestens eine erste Spur, mindestens eine zweite Spur, mindestens eine dritte Spur und optional weitere Spuren bilden. Im Kontext der vorliegenden Offenbarung bezeichnet der Begriff Spur eine lineare (geradlinige) Anordnung von Markierungen in einer Reihe. Mit anderen Worten ist die Gesamtheit aller auf der Laufbandoberfläche vorgesehenen optischen Markierungen in mehrere Gruppen aufgeteilt, wobei jede Gruppe eine der hier beschriebenen Spuren bildet, in der die zugehörigen Markierungen in einer Reihe positioniert sind. Vorzugsweise verläuft die erste Spur dabei parallel zur zweiten Spur. Wenn das Laufband ein unidirektionales Laufband ist, können die erste Spur und die zweite Spur insbesondere parallel zur Längsrichtung des Laufbandes verlaufen. Wenn mehrere erste/zweite/dritte/weitere Spuren vorgesehen sind, können diese bei Betrachtung von oben nebeneinander liegen, sodass sich in einer Querrichtung eine Gruppe mit einer ersten Spur, einer zweiten Spur und einer dritten Spur derart wiederholt, dass nach der dritten Spur eine weitere erste Spur angeordnet ist, und so weiter. In einer weiteren Variante sind zwei erste Spuren und zwei zweite Spuren bei einem unidirektionalen Laufband so angeordnet, dass die ersten Spuren bei der Betrachtung von oben einem Rand der Lauffläche näher sind als die zweiten Spuren.

Die Markierungen der ersten Spur (im Folgenden erste Markierungen), der zweiten Spur (im Folgenden auch zweite Markierungen) und etwaiger weiterer Spuren (insbesondere der dritten Spur, nachfolgend dritte Markierungen) sind jeweils periodisch auf der Laufbandoberfläche angeordnet. D.h., innerhalb der jeweiligen Spur ist ein Periode ((Längs-) Versatz, sog. Pitch, zwischen den Markierungen) vorzugsweise konstant. In der Folge kann sich beim Abtasten (Scannen) der Laufbandoberfläche entlang einer quer zur Fortbewegungsrichtung verlaufenden Abtastlinie (bei einer festen Fortbewegungsgeschwindigkeit) ebenfalls ein periodisches Signal ergeben. In einer bevorzugten Variante sind die Markierungen der ersten Spur (ersten Markierungen) näher zueinander angeordnet als die Markierungen der zweiten Spur (zweiten Markierungen). Entsprechend kann eine Periode in einem ersten Intensitätssignal, welches der ersten Spur entspricht, kleiner sein als eine Periode eines zweiten Intensitätssignals, welches der zweiten Spur entspricht. Die Periode kann sich von Spur zu Spur verdoppeln; beispielsweise kann die Periode in der zweiten Spur doppelt so groß sein wie die Periode in der ersten Spur und/oder die Periode in der dritten/weiteren Spur doppelt so groß sein wie die Periode in der zweiten Spur.

Außerdem können die ersten Markierungen (optisch) anders ausgestaltet sein als die zweiten Markierungen. Die ersten Markierungen können sich insbesondere hinsichtlich ihrer Geometrie (beispielsweise ihrer Anzahl von Ecken), ihrer Größe und/oder ihres Reflexionsspektrums von den zweiten Markierungen unterscheiden. Beispielsweise können die ersten Markierungen kreisrund, die zweiten Markierungen viereckig und die weiteren/dritten Markierungen dreieckig ausgestaltet sein. Dies ermöglicht, die Spuren vergleichsweise einfach mittels der Kameraeinrichtung zu erkennen und voneinander zu unterscheiden.

Wenn die Markierungen derart angeordnet sind, dass sie ferner die dritte Spur bilden, ist bevorzugt vorgesehen, dass die dritte Spur quer zur ersten und/oder zweiten Spur verläuft. Ferner kann eine parallel zur dritten Spur verlaufende vierte Spur ausgebildet sein. Vorzugsweise ist (abgesehen von der Ausrichtung) die dritte Spur wie die erste Spur und/oder die vierte Spur wie die zweite Spur ausgestaltet. Dieses Muster von Markierungen eignet sich insbesondere für omnidirektionale Laufbänder, bei denen der Benutzer die Laufrichtung über die Zeit ändern und somit zeitweise entlang der ersten/zweiten oder dritten/vierten Spur laufen kann.

Auf der Laufbandoberfläche ist vorzugsweise ein einfarbiger (beispielsweise grauer oder schwarzer) mittiger Streifen ausgebildet, der vorzugsweise in einer Längsrichtung des (bevorzugt unidirektionalen) Laufbandes verläuft. Der mittige Streifen kann als zusammenhängende ("durchgehende") Infrarotreflexionsfläche ausgestaltet sein. Der mittige Streifen ist vorzugsweise breiter als die erste, zweite, dritte und/oder vierte Spur. Somit kann der Bereich der Laufbandoberfläche, auf dem der Benutzer seine Füße vorteilhafterweise aufsetzen kann, vergleichsweise breit sein. In der Folge kann der Benutzer seine Füße freier auf das Laufband aufsetzen. Die erste, zweite, dritte beziehungsweise vierte Spur werden vorzugsweise ausschließlich zur Geschwindigkeitsmessung verwendet, während der mittlere Streifen ausschließlich zur Positionserfassung genutzt wird. Der mittlere Streifen kann entsprechend zumindest zeitweise insbesondere mindestens 80 % oder mindestens 90 % der Breite der Lauffläche einnehmen. Bevorzugt weist der mittige Streifen eine Breite senkrecht zur Längsrichtung auf, die mindestens 10 cm oder mindestens 20 cm beträgt. Vorzugsweise verlaufen die ersten, zweiten, dritten beziehungsweise vierten Spuren zwischen dem Streifen und einem seitlichen Rand der Lauffläche. Der Streifen ist dazu ausgelegt, einen gleichmäßigen Hintergrund für den Fuß des Benutzers zu bilden. Dies ermöglicht, nicht nur die Markierungen sondern auch die Fußkontur des Benutzers präzise zu erfassen. Im Folgenden bezieht sich der Begriff "die Spuren" auf die erste, zweite, dritte und ggf. weiteren Spuren. Analog dazu bezieht sich der Begriff "die Markierungen" auf die ersten, zweiten, dritten und ggf. weiteren Markierungen.

Die Markierungen können ferner mehrere, vorzugsweise mindestens vier, verschieden ausgestaltete Referenzmarker umfassen, die an Ecken eines gedachten Vielecks, insbesondere Rechtecks, auf der Laufbandoberfläche angeordnet sind. Die Referenzmarker unterscheiden sich vorzugsweise untereinander optisch derart, dass sie alle in den Bildern unterschiedlich wiedergegeben sind. D.h., alle Referenzmarker können im Hinblick auf vorbestimmte optische Eigenschaften unterschiedlich sein. Zu diesem Zweck kann jeder Referenzmarker ein für ihn charakteristisches Muster aufweisen. Die Muster können binär, beispielsweise als Barcodes, QR-Codes oder ArUco-Marker ausgebildet, sein. Ein ArUco-Marker ist ein synthetischer, quadratischer Marker, der aus einem schwarzen Rand und einem von dem Rand umschlossenen inneren schwarz-weißen (binären) Muster (sogenannte binäre Matrix) besteht, wobei das Muster den Identifikator des Markers festlegt. Die Referenzmarker können auf Spuren gleicher Perioden (beispielsweise zwei erste Spuren oder zwei zweite Spuren) verteilt sein. Vorzugsweise unterscheiden sich die Referenzmarker dabei von den übrigen in den jeweiligen Spuren vorgesehenen Markierungen. Höchstvorzugsweise haben alle Markierungen, einschließlich der dort befindlichen Referenzmarker, in der jeweiligen Spur dieselbe Kontur. Dies ermöglicht, die Referenzmarker zur Bildkorrektur zu verwenden, ohne das Ermitteln der Bewegungsinformation zu stören. Ferner sind die Referenzmarker bevorzugt gleich groß.

Die Referenzmarker sind dazu vorgesehen, von der Kameraeinrichtung verwendet zu werden, um die (vorzugsweise alle) von der Steuereinrichtung zu erhaltenden Bilder der zeitlichen Bildfolge einer Bildkorrektur zu unterziehen. Vorzugsweise enthält die Bildkorrektur eine perspektivische Entzerrung (sogenannte Keystone- oder Trapezkorrektur). Auf diese Weise kann die Kamera bodennah, insbesondere in einem vertikalen Abstand von weniger als 80 cm oder weniger als 50 cm von der Lauffläche des Laufbandes, an einem Längsende des Laufbandes angeordnet werden und vorzugsweise flach auf die Laufbandoberfläche ausgerichtet sein. Einen Zwischenwinkel zwischen der optischen Achse der Kamera und der Laufbandoberfläche kann vorzugsweise kleiner als 60° oder kleiner als 45° oder kleiner als 30° sein. Entsprechend kann die Kameraeinrichtung dezent und insbesondere unterhalb der Augenhöhe und/oder oberhalb der Schritthöhe des Benutzers am Laufband integriert werden.

Um die perspektivische Entzerrung durchzuführen, kann die Kameraeinrichtung, vorzugsweise separat von und/oder zeitlich vor den Gewinnen der zeitlichen Bildfolge, mindestens ein gesondertes, für die Kalibrierung vorgesehenes Bild erfassen. Dies kann bei einem Initialisierungsvorgang der Kameraeinrichtung durchgeführt werden. Wenn beispielsweise die Kamera wie oben erläutert angeordnet ist, kann die Lauffläche auf dem gesonderten Bild eine Trapezform (insbesondere eine echte Trapezform mit genau zwei Parallelen und zwei schräg dazu und zueinander verlaufenden Kanten) aufweisen, wobei das Laufband auf dem gesonderten Bild oben breiter abgebildet ist als unten. Entsprechend können die Spuren auf dem gesonderten Bild nicht vertikal, sondern (im Verlauf von unten nach oben) schräg auswärts verlaufen, wobei die Erkennung der Markierung dadurch vorteilhafterweise nicht negativ beeinflusst wird.

Um die Entzerrung durchzuführen, kann die Kameraeinrichtung Informationen über die tatsächliche Anordnung der Referenzmarker erhalten (die geeignet im Laufbandsystem abgespeichert sind). Beispielsweise können diese Informationen eine Soll-Anordnung der Referenzmarker auf einem nach der Kalibrierung zu erfassenden Bild enthalten. Diese Soll-Anordnung kann einer Anordnung der Referenzmarker in der Realität (auf der Laufbandoberfläche; bei vertikaler Betrachtung) entsprechen. Im Fall des gedachten Vielecks können in der Soll-Anordnung die Referenzmarker somit an den Ecken des Vielecks angeordnet sein. Aus dem erfassten, gesonderten Bild kann die Kameraeinrichtung ferner die Ist-Anordnung der Referenzmarker in dem gesonderten Bild bestimmen. Die Kameraeinrichtung kann aus einer Differenz (Unterschied) zwischen der Ist-Anordnung und der Soll-Anordnung eine Korrekturfunktion ableiten, die geeignet ist, die Ist-Anordnung in die Soll-Anordnung zu überführen. Ferner kann die Kameraeinrichtung diese Korrekturfunktion abspeichern, um sie später beim Gewinnen der zeitlichen Bildfolge auf erfasste Bilddaten anzuwenden. Somit kann das Gewinnen der zeitlichen Bildfolge enthalten, die von der Kamera erfassten (unkorrigierten) Bilddaten der Korrekturfunktion zu unterziehen, sodass die Bilder der zeitlichen Bildfolge mittels der Kameraeinrichtung auf Basis der Referenzmarker der Bildkorrektur unterzogen, insbesondere perspektivisch entzerrt (bspw. trapezkorrigiert), sein können. Somit sind Fertigungstoleranzen für die Funktion des Laufbandsystems unkritisch.

Es wurde gesagt, dass die Steuereinrichtung dazu eingerichtet ist, auf Basis der Bildfolge die mindestens eine Bewegungsinformation des Benutzers zu ermitteln. Die Bewegungsinformation kann dabei direkt (d.h., auf Basis eines erfassten Körperteils des Benutzers, vorzugsweise des Fußes) oder indirekt (insbesondere über einen Bewegungsparameter des Laufbandes) ermittelt werden. Die mindestens eine Bewegungsinformation kann eine Fortbewegungsgeschwindigkeit des Benutzers auf der Laufbandoberfläche (relativ zur sich bewegenden Laufbandoberfläche, nicht relativ zur Umgebung des Laufbandes), eine Beschleunigung des Benutzers, eine Position und/oder einen Zeitpunkt eines Auftritts des Benutzers auf die Laufbandoberfläche, eine Ausrichtung eines Fußes des Benutzers zum Zeitpunkt des Auftritts und/oder eine Form des Fußes des Benutzers zum Zeitpunkt des Auftritts enthalten. Der Begriff "Fuß des Benutzers" bezieht sich hierbei auf den nackten oder (beispielsweise mit Schuhwerk) angezogenen Benutzerfuß. Insofern ist vorliegend eine etwaige Bekleidung des Benutzers als Teil des Benutzers anzusehen.

Nachfolgend wird auf verschiedene Varianten eingegangen, die jeweils zur Bestimmung einer dieser Bewegungsinformationen vorgesehene Teile der Steuereinrichtung aufweisen. Der Verständlichkeit halber sind diese Teile mit eigenen Namen (Geschwindigkeitsermittlungseinrichtung, Auftrittsermittlungseinrichtung, Fußausrichtungserkennungseinrichtung, etc.) bezeichnet, wenngleich sie nicht zwangsweise als abgeschlossene Komponenten der Steuereinrichtung ausgebildet sein müssen. Vielmehr sind die Teile der Steuereinrichtung logisch zu verstehen.

In einer bevorzugten Variante bestimmt die Steuereinrichtung die Fortbewegungsgeschwindigkeit des Benutzers als Teil der Bewegungsinformation auf Basis der zeitlichen Bildfolge unter Verwendung der Markierungen. Zu diesem Zweck weist die Steuereinrichtung die Geschwindigkeitsermittlungseinrichtung auf, die dazu eingerichtet ist, aus der Bildfolge einen oder mehrere zeitliche Intensitätsverläufe an einer vorbestimmten Stelle in den mehreren Bildern (über die Bildfolge) zu ermitteln. Dabei wird die Laufbandoberfläche im Wesentlichen optisch unter Erfassung des durch die Markierungen gebildeten Musters in den Spuren abgetastet, um die Intensitätsverläufe zu ermitteln, und die Fortbewegungsgeschwindigkeit wird auf Basis der Intensitätsverläufe bestimmt.

Im Detail erhält die Geschwindigkeitsermittlungseinrichtung die zeitliche Bildfolge mit den mehreren (vorzugsweise trapezkorrigierten) Bildern (direkt oder indirekt) von der Kameraeinrichtung. Die Bilder dieser Bildfolge können zunächst optional von der Geschwindigkeitsermittlungseinrichtung mittels eines Kantendetektions-Filters (beispielsweise eines Sobel-Filters) zu Kantenbildern umgewandelt werden. In diesem Fall gilt nachfolgend für die Bilder gesagtes entsprechend für die Kantenbilder. Die Bilder der Bildfolge werden sodann vorzugsweise ausgewertet, um die Intensitätsverläufe zu ermitteln. Hierzu werden mittels der Geschwindigkeitsermittlungseinrichtung den Markierungen entsprechende Objekte in den Bildern erkannt. Vorteilhafterweise kann die Erkennung dieser Objekte mittels eines Musterabgleichs (engl. pattern matching) erfolgen. Zu diesem Zweck können die optische Gestalt aller auf der Laufbandoberfläche vorgesehenen Markierungen (d.h., die einzelnen Markierungen) und/oder das durch die Markierungen gebildete Muster in den Spuren auf der Laufbandoberfläche im Laufbandsystem abgespeichert und für den Musterabgleich herangezogen werden. Im oben genannten Beispiel können somit die Kreise der ersten Spur, die Rechtecke der zweiten Spur und/oder die Dreiecke der dritten Spur in den Bildern erkannt sein. Es sei jedoch betont, dass unterschiedliche geometrische Formen der Markierungen nicht zwingend erforderlich sind. Beispielsweise können Markierungen der ersten/zweiten/dritten Spuren rechteckig sein. Der Intensitätsverlauf bzw. die Periode rechteckiger Flächen reicht zur präzisen Geschwindigkeitsermittlung aus.

Sodann kann die Geschwindigkeitsermittlungseinrichtung pro Spur einen zugehörigen Intensitätsverlauf ermitteln. Hierzu zieht die Geschwindigkeitsermittlungseinrichtung vorzugsweise eine Abtastrate der Kamera heran, um einen Zeitversatz zwischen den Bildern der Bildfolge zu bestimmen, auf dessen Basis für jeden Datenpunkt des Intensitätsverlaufs ein Zeitwert (in einem Diagramm: der x-Wert) bestimmt wird. Der zugehörige Intensitätswert (y-Wert) kann für jedes der Bilder aus dem zugehörigen Wert des Bildpunkts an einer Stelle (Position im jeweiligen Bild mit festen Bildkoordinaten (a, b)) auf der jeweiligen Spur resultieren. Da alle Bilder an derselben Stelle ausgewertet werden können, kann bedingt durch die umlaufende Bewegung des Laufbandes somit eine zeitlich periodisch variable Intensität bestimmt werden, die charakteristisch für die der Fortbewegungsgeschwindigkeit des Benutzers entsprechenden Bewegungsgeschwindigkeit der Laufbandoberfläche im Bereich der Lauffläche ist.

Die Geschwindigkeitsermittlungseinrichtung kann dazu ausgelegt sein, auf Basis von ihr verfügbaren Umrechnungsinformationen den Intensitätsverlauf in die Fortbewegungsgeschwindigkeit des Benutzers umzurechnen. Zu diesem Zweck kann die Geschwindigkeitsermittlungseinrichtung beispielsweise eine Periode in dem periodischen Intensitätsverlauf bestimmen und mittels der Umrechnungsinformationen in die Bewegungsgeschwindigkeit der Laufbandoberfläche beziehungsweise die Fortbewegungsgeschwindigkeit umrechnen. Letztere kann sodann als Teil der Bewegungsinformation im Laufbandsystem weiterverwendet werden.

In einer bevorzugten Variante ist die Geschwindigkeitsermittlungseinrichtung dazu ausgelegt, in Abhängigkeit von der ermittelten Fortbewegungsgeschwindigkeit des Benutzers zwischen den für die Bestimmung der Fortbewegungsgeschwindigkeit heranzuziehenden Spuren zu wechseln. Bei dieser Variante erfolgt die Bestimmung der Fortbewegungsgeschwindigkeit vorzugsweise zunächst auf Basis der ersten Spur (in der ein Versatz zwischen den Markierungen am geringsten ist). Die Geschwindigkeitsermittlungseinrichtung ist ferner dazu ausgelegt, zu bestimmen, ob die so ermittelte Fortbewegungsgeschwindigkeit einen vorbestimmten ersten Schwellenwert übertrifft (wenn beispielsweise der Benutzer beschleunigt und zum Laufen übergeht). Wenn dies der Fall ist, d.h., ab Überschreitung des ersten Schwellenwerts, kann die Geschwindigkeitsermittlungseinrichtung die weiter beabstandeten zweiten Markierungen (der zweiten Spur) für das Bestimmen der Fortbewegungsgeschwindigkeit wie oben erläutert verwenden. Ab einen zweiten Schwellenwert kann die Geschwindigkeitsermittlungseinrichtung sodann dazu ausgelegt sein, das Bestimmen der Fortbewegungsgeschwindigkeit auf Basis der dritten Markierungen/dritten Spur auszuführen, und so weiter. Umgekehrt kann die Geschwindigkeitsermittlungseinrichtung bei einer Verzögerung der Fortbewegungsgeschwindigkeit des Benutzers und Unterschreitung des ersten Schwellenwertes wieder von der Verwendung der zweiten Spur zur Verwendung der ersten Spur zurückkehren. Im Ergebnis kann auf diese Weise eine vergleichsweise große Bandbreite von Geschwindigkeiten mit einer relativ kostengünstigen Kamera ohne besonders hohe Bildraten und/oder Auflösungen präzise bestimmt werden.

Insbesondere, aber nicht nur, wenn die Steuereinrichtung die Auftrittsermittlungseinrichtung und/oder die Fußausrichtungserkennungseinrichtung aufweist, kann die Steuereinrichtung dazu eingerichtet sein, in mindestens einem ersten Bild, einem zweiten Bild und einem dritten Bild von den mehreren Bildern der zeitlichen Bildfolge jeweils ein Bildobjekt mit der größten Fläche und/oder Kontur zu ermitteln. Dieses für den Fuß repräsentative Bildobjekt kann der weiteren Funktion der Auftrittsermittlungseinrichtung beziehungsweise der Fußausrichtungserkennungseinrichtung (als ein einem Fuß des Benutzers entsprechendes Fußbildobjekt) zugrunde gelegt werden. Zu diesem Zweck kann vorgesehen sein, dass die Kamera derart angeordnet ist, dass Ihr Erfassungsbereich nicht über die Laufbandoberfläche hinausragt.

Die Auftrittsermittlungseinrichtung ist vorzugsweise dazu vorgesehen, einen Auftritt des Benutzers mit seinem Fuß (kurz: Auftritt des Fußes) auf die Laufbandoberfläche am Ende eines vom Benutzer durchgeführten Schritts festzustellen. Insofern kann die Auftrittsermittlungseinrichtung als Schrittzähler ausgebildet sein. Auch hierbei können die Bilder der Bildfolge wie im Fall der Geschwindigkeitsermittlungseinrichtung zunächst optional mittels eines Kantendetektions-Filters (beispielsweise eines Sobel-Filters) zu Kantenbildern umgewandelt werden, wobei nachfolgend für die Bilder gesagtes entsprechend für die Kantenbilder gilt. Zum Feststellen des Auftritts ist die Auftrittsermittlungseinrichtung vorzugsweise dazu ausgelegt, auf Basis einer ersten Position des für den Fuß repräsentativen Bildobjekts im ersten Bild und einer zweiten Position des Bildobjekts im zweiten Bild eine erste Bewegungsrichtung des Fußes des Benutzers zu bestimmen. Hierzu können beispielsweise erste Koordinaten eines Referenzpunkts (beispielsweise eines Schwerpunkts oder eines Punkts im Bereich eines vorbestimmten Zehs) des Bildobjekts im ersten Bild und die zweiten Koordinaten des Referenzpunkts (beispielsweise Schwerpunkts bzw. des Punkts im Bereich des vorbestimmten Zehs) des Bildobjekts im zweiten Bild bestimmt und ein Bewegungsvektor von den ersten Koordinaten bis zu den zweiten Koordinaten bestimmt werden. Eine Richtung dieses Bewegungsvektors kann als die erste Bewegungsrichtung festgelegt werden. Analog dazu kann auf Basis der zweiten Position des Bildobjekts im zweiten Bild und einer dritten Position des Bildobjekts im dritten Bild eine zweite Bewegungsrichtung des Fußes des Benutzers mittels der Auftrittsermittlungseinrichtung bestimmt werden.

Das Auftreten während des Fortbewegens über das Laufband lässt sich vorteilhafterweise einfach und elegant sowie zuverlässig kamerabasiert detektieren, da es mit einer Richtungsänderung des Bildobjekts einhergeht. In der genannten Anordnung der Kamera bewegt sich das Bildobjekt (in der Bildfolge) nämlich vor dem Auftreten sukzessive nach unten und nach dem Auftreten nach oben (und umgekehrt). Dementsprechend ist die Auftrittsermittlungseinrichtung somit bevorzugt dazu ausgelegt, zu bestimmen, ob ein Winkel zwischen der ersten Bewegungsrichtung und der zweiten Bewegungsrichtung einen vorbestimmten Winkel-Schwellenwert übertrifft. Wenn dies nicht der Fall ist, beginnt die Funktion der Auftrittsermittlungseinrichtung nach Art einer Schleife von vorne. Wenn hingegen der Winkel den vorbestimmten Winkel-Schwellenwert übertrifft, stellt die Auftrittsermittlungseinrichtung den Auftritt des Benutzers auf die Laufbandoberfläche fest und speichert vorzugsweise die Position des Bildobjekts im zweiten Bild und/oder den Zeitpunkt des Auftritts. Dementsprechend kann die der auszuführenden Steuerfunktion zugrunde gelegte Bewegungsinformation vorzugsweise die Position des Bildobjekts im zweiten Bild, eine daraus abgeleitete Position des Auftritts auf die Laufbandoberfläche und/oder den Zeitpunkt des Auftritts enthalten.

Gemäß einer weiteren Variante, bei der die Steuereinrichtung die Fußausrichtungserkennungseinrichtung umfasst, wird der Auftritt mit dem Fuß auf die Laufbandoberfläche wie oben erläutert bestimmt. Auf Basis des zugehörigen zweiten Bildes kann in diesem Fall mindestens ein für das Gangbild des Benutzers spezifischer Parameter, insbesondere die Fußausrichtung beim Auftritt, ermittelt werden. Auch hierbei können die Bilder der Bildfolge wie im Fall der Geschwindigkeitsermittlungseinrichtung zunächst optional mittels eines Kantendetektions-Filters (beispielsweise eines Sobel-Filters) zu Kantenbildern umgewandelt werden, wobei nachfolgend für die Bilder gesagtes entsprechend für die Kantenbilder gilt.

Im Detail ist die Fußausrichtungserkennungseinrichtung dazu ausgelegt, in dem zweiten Bild ein minimal umschreibendes Vieleck, insbesondere ein minimal umschreibendes Rechteck, für das Bildobjekt sowie eine Haupterstreckungsrichtung des minimal umschreibenden Vielecks/Rechtecks zu ermitteln. Das minimal umschreibende Vielecks/Rechteck ist im Kontext dieser Offenbarung, dasjenige Vieleck/Rechteck mit der kleinsten Fläche, welches das Bildobjekt umschließt. Die Haupterstreckungsrichtung verläuft dabei vorteilhafterweise parallel zu der längsten Seite des Vielecks bzw. zu einer Längsseite des Rechtecks. Aus dem zweiten Bild kann ferner ein Auftrittswinkel zwischen dieser Haupterstreckungsrichtung/Längsseite und der Längsrichtung der abgebildeten Spuren beziehungsweise der Längsrichtung der Lauffläche bestimmt werden, der für die Fußausrichtung repräsentativ ist. Die Fußausrichtungserkennungseinrichtung ist dementsprechend dazu ausgebildet, die Bewegungsinformation die Haupterstreckungsrichtung und/oder den genannten Auftrittswinkel enthalten zu lassen.

Eine weitere Variante sieht vor, dass die Steuereinrichtung eine Benutzererkennungseinrichtung (zum Identifizieren des Benutzers) aufweist. Die Benutzererkennungseinrichtung kann dazu ausgelegt sein, den Benutzer basierend auf einer Kontur des Bildobjekts zu identifizieren. Zu diesem Zweck können in der Steuereinrichtung mehrere, jeweils für einen Benutzer spezifische Konturmuster abgelegt sein. Die Benutzererkennungseinrichtung kann mittels Mustererkennung bestimmen, ob die Kontur des Bildobjekts einem dieser Konturmuster entspricht. Wenn dies der Fall ist, kann die Benutzererkennungseinrichtung dazu ausgelegt sein, eine Benutzeridentität ("Benutzer-ID") als Teil der Bewegungsinformation festzulegen. Unterschiedliches Schuhwerk kann dabei als unterschiedliche Profile des erkannten Benutzers gewertet werden. Wenn die Kontur des Bildobjekts beispielsweise einem für einen nackten Fuß ("Barfuß") entsprechenden Konturmuster entspricht, kann die Steuerfunktion enthalten, eine oder mehrere Yoga-Anwendungen auf der Anzeigeeinrichtung anzuzeigen. Wenn die Kontur des Bildobjekts beispielsweise einem für einen Sportschuh (Turnschuh) entsprechenden Konturmuster entspricht, kann die Steuerfunktion enthalten, eine oder mehrere Laufanwendungen ("Lauf-Apps") auf der Anzeigeeinrichtung anzuzeigen.

Das Laufbandsystem umfasst vorzugsweise ferner eine Anzeigeeinrichtung, um dem Benutzer die Bewegungsinformation(en) anzuzeigen. In diesem Fall kann die Steuereinrichtung dazu ausgelegt sein, die Anzeigeeinrichtung entsprechend anzusteuern. Nachfolgend für die Anzeigebilder gesagtes gilt entsprechend für jedes Anzeigebild. D.h., die Steuerfunktion umfasst bevorzugt, die Anzeigeeinrichtung anzusteuern, die Bewegungsinformation in einem oder mehreren Anzeigebildern anzuzeigen. Außerdem kann das Laufbandsystem eine Speichereinheit aufweisen. Entsprechend kann die Steuerfunktion umfassen, die Speichereinheit anzusteuern, die Bewegungsinformation abzuspeichern. Darüber hinaus kann das Laufbandsystem eine Datenübertragungseinrichtung aufweisen. Die Steuerfunktion kann umfassen, die Datenübertragungseinrichtung anzusteuern, die Bewegungsinformation an ein Drittgerät zu versenden.

Die Anzeigeeinrichtung kann eine Projektionseinrichtung aufweisen, die dazu angeordnet ist, die Bewegungsinformation im Anzeigebild beziehungsweise in den Anzeigebildern auf die Laufbandoberfläche, insbesondere auf den Teil der Laufbandoberfläche, von dem die Bilder gewonnen worden sind, zu projizieren. Der Erfassungsbereich der Kamera kann dabei mit einer Projektionsfläche der Projektionseinrichtung auf der Laufbandoberfläche registriert, insbesondere kongruent oder konzentrisch sowie ausgerichtet, sein. Dies ermöglicht, den Benutzer die mindestens eine ermittelte Bewegungsinformation auf einfache Weise intuitiv, insbesondere als Zahl oder Grafik, darzustellen. Insbesondere wenn die Kamera eine Infrarotkamera ist, kann die Kamera mit einem auf einer optischen Achse der Kamera angeordneten, sichtbares Licht abschwächenden (dämpfenden) optischen Filter versehen sein. Der optische Filter kann somit für Infrarotlicht durchlässiger sein als für sichtbares Licht. Vorzugsweise wird also die Bildfolge mittels der Kamera durch den optischen Filter hindurch erfasst. Auf diese Weise kann eine Störung der Kameraeinrichtung durch (Projektions-) Licht der Anzeigeeinrichtung wirkungsvoll reduziert oder verhindert werden.

Die Steuerfunktion kann vorzugsweise enthalten, die Anzeigebilder jeweils wie folgt zu bilden. Wenn mindestens eine Bewegungsinformation die Fortbewegungsgeschwindigkeit des Benutzers enthält, kann die Steuerfunktion enthalten, eine mit den Anzeigebildern angezeigte visuelle Darstellung, beispielsweise eine virtuelle Laufumgebung mit Hindernissen auf dem Boden, gemäß der Fortbewegungsgeschwindigkeit über die Projektionsfläche zu bewegen. Vorzugsweise kann die Bewegung der virtuellen Laufumgebung so gestaltet sein, dass Teile dieser Laufumgebung im Bezugssystem der (bewegten) Laufbandoberfläche ortsfest sind. Dem Benutzer kann auf diese Weise ein immersiveres Erlebnis vermittelt werden.

Wenn die Bewegungsinformation die Haupterstreckungsrichtung des minimal umschreibenden Vielecks/Rechtecks enthält, kann diese Haupterstreckungsrichtung zur Steuerung einer Bewegungsrichtung durch die virtuelle Laufumgebung genutzt werden. Dies ist insbesondere bei omnidirektionalen Laufbändern von Vorteil für ein immersiveres Erlebnis des Benutzers. Wenn die Auftrittsermittlungseinrichtung vorgesehen ist, können die Anzeigebilder das Bildobjekt (oder eine für das Bildobjekt repräsentative Grafik, z.B. ein schematischer Fußabdruck) an derselben Position wie in dem zweiten Bild und/oder weitere Angaben hinsichtlich der abgeleiteten Position des Auftritts auf die Laufbandoberfläche und/oder des Zeitpunkts des Auftritts enthalten. Darüber hinaus können kombinatorische Grafikelemente in den Anzeigebildern dargestellt sein. Beispielsweise können diese Grafikelemente in einer Situation dargestellt sein, wenn es zu einer Kollision zwischen dem Bildobjekt und einem Objekt aus der virtuellen Laufumgebung (z.B. dem Hindernis) kommt.

In einer weiteren Variante kann die Anzeigeeinrichtung eine Brille für virtuelle oder augmentierte Realität (VR-Brille bzw. AR-Brille) umfassen. Hierbei können die Anzeigebilder in der Brille angezeigt werden. Vorstehend für die Anzeigebilder gesagtes gilt somit entsprechend. Die einzelnen Einrichtungen können dann zusammen als Standard-XR Eingabegerät wirken, so dass über diese Standardschnittstelle auch bereits bestehende VR-Inhalte gesteuert werden können.

Insbesondere wenn das Laufband als Lamellen-basiertes Laufband mit den quer über die Lauffläche verlaufenden Lamellen ausgestaltet ist, können die Markierungen anstatt direkt auf den Lamellen angeordnet zu sein, Teil einer Matte sein, welche mittels einer Befestigungsvorrichtung versehen ist, mittels der die Matte zerstörungsfrei reversibel an den Lamellen des Laufbandes befestigt werden kann. Die Matte kann elastisch und/oder als Fußmatte ausgestaltet sein. Ferner kann die Matte, jeweils teilweise oder vollständig, aus einem Gummi (insbesondere Kautschuk), aus einem Kunststoff-Gewirke (insbesondere einem Polyester-Gewirke) und/oder einem Textil (insbesondere als Teppich) hergestellt sein. Die Matte kann mit einem Schaum (insbesondere einem Weichschaum) beschichtet sein. Die Matte kann zum Beispiel als Yogamatte ausgebildet sein. Die Laufbandoberfläche kann dabei als Oberfläche der Matte ausgebildet sein. Die Befestigungsvorrichtung kann ein oder mehrere Profilleisten (Winkelleisten) aufweisen, die sich jeweils vorzugsweise von der Matte aus zwischen zwei zueinander benachbarten Lamellen hindurch erstrecken können und auf einer der Matte entgegengesetzten Seite mindestens einer Lamellen an dieser anliegen.

Da sich ein Abstand zwischen den Lamellen bei Umlenken über die Umlenkrollen verändern kann, ist ein Abschnitt der Matte zwischen zwei benachbarten Profilleisten vorzugsweise mit einer Falte versehen, während dieser Abschnitt der Matte an der Lauffläche angeordnet ist. Die Falte ist dabei so bemessen, dass sie während des Umlenkens des genannten Abschnitts über die Umlenkrollen glatt gezogen wird und sich im Bereich der Lauffläche wieder bildet. Zur Erhöhung des Komforts des Benutzers kann die Falte mit einer Magneteinrichtung versehen sein, die eine Höhe der Falte senkrecht zur Lauffläche verringert.

Auf der Variante mit der Matte basierend umfasst der hier vorgeschlagene Bausatz zum Aufrüsten eines Laufbandes zu einem vorstehend im Detail beschriebenen Laufbandsystem die Kameraeinrichtung, die Steuereinrichtung sowie die Matte mit der Befestigungsvorrichtung. Die Steuereinrichtung und die Kameraeinrichtung können in einem gemeinsamen Gehäuse vorgesehen sein, welches beim Aufrüsten insbesondere an einem Längsende des Laufbandes aufgestellt oder am Laufband angebracht werden kann. Vermöge der Referenzmarkierungen kann auf eine zusätzliche trapezkorrigierende manuelle Kalibrierung verzichtet werden. Die Matte kann wiederum mittels der Befestigungseinrichtung an die Lamellen angebracht werden.

Der Bausatz kann ferner beliebige, insbesondere alle, Merkmale des oben ausführlich beschriebenen Laufbandsystems aufweisen.

Darüber hinaus ist vorliegend in unabhängiger Form ein weiteres Laufbandsystem offenbart, welches umfasst: ein Laufband mit einer zum Betreten durch einen Benutzer vorgesehenen Laufbandoberfläche, eine Kameraeinrichtung mit mindestens einer Kamera, wobei die Kameraeinrichtung als Infrarotkamera ausgebildet und dazu eingerichtet ist, eine zeitliche Bildfolge mit mehreren Bildern von mindestens einem Teil der Laufbandoberfläche unter Erfassung der Markierungen zu gewinnen, und eine Steuereinrichtung, die dazu eingerichtet ist, die Bildfolge von der Kameraeinrichtung zu erhalten, auf Basis der Bildfolge mindestens eine Bewegungsinformation des sich unter Betreten der Laufbandoberfläche auf dem Laufband fortbewegenden Benutzers zu ermitteln, und eine Steuerfunktion auf Basis der Bewegungsinformation auszuführen.

Dieses weitere Laufbandsystem kann außerdem sämtliche der Merkmale des oben im Detail beschriebenen Laufbandsystems enthalten. Insbesondere kann dieses weitere Laufbandsystem die Auftrittsermittlungseinrichtung, die Fußausrichtungserkennungseinrichtung, die Benutzererkennungseinrichtung und/oder die Anzeigeeinrichtung enthalten.

Bevorzugte Laufbandsysteme werden nun genauer unter Bezugnahme auf die beigefügten schematischen, nicht maßstabsgetreuen Zeichnungen erläutert, wobei
- Figur 1: eine erste Variante eines Laufbandsystems in einer perspektivischen Gesamtansicht zeigt, bei dem ermittelte Bewegungsinformationen in der Steuereinrichtung gespeichert werden;
- Figur 2: das Laufbandsystem aus Figur 1 in einer schematischen Detailansicht mit seinen Komponenten zeigt;
- Figur 3: die Funktionsweise einer Geschwindigkeitsermittlungseinrichtung des Laufbandsystems aus Figur 1 vereinfacht dargestellt;
- Figur 4: die Funktionsweise einer Auftrittsermittlungseinrichtung des Laufbandsystems aus Figur 1 vereinfacht darstellt;
- Figur 5: die Funktionsweise einer Fußausrichtungserkennungseinrichtung des Laufbandsystems aus Figur 1 vereinfacht darstellt;
- Figur 6: die Funktionsweise einer Benutzererkennungseinrichtung des Laufbandsystems aus Figur 1 vereinfacht darstellt;
- Figur 7: eine weitere Variante eines Laufbandsystems in einer perspektivischen Gesamtansicht zeigt, welches die Geschwindigkeitsermittlungseinrichtung nicht aufweist;
- Figur 8: eine weitere Variante eines Laufbandsystems in einer perspektivischen Gesamtansicht zeigt, bei dem zusätzlich eine Anzeigeeinrichtung mit einer Projektionseinrichtung vorgesehen ist;
- Figur 9a: eine Laufbandoberfläche des Laufbandsystems aus Figur 8 in einer Detailansicht zeigt;
- Figur 9b: eine Modifikation der Laufbandoberfläche des Laufbandsystems aus Figur 8 in einer Detailansicht zeigt;
- Figur 10a: eine Laufbandoberfläche einer weiteren Variante eines Laufbandsystems mit einem omnidirektionalen Laufband in einer Detailansicht zeigt;
- Figur 10b: eine Laufbandoberfläche einer weiteren Variante eines Laufbandsystems mit einem omnidirektionalen Laufband in einer Detailansicht zeigt;
- Figur 11: das Laufbandsystem aus Figur 8 in einer schematischen Detailansicht mit seinen Komponenten zeigt;
- Figur 12: die Funktionsweise einer Steuereinrichtung des Laufbandsystems aus Figur 8 zur Ausführung einer Steuerfunktion vereinfacht darstellt;
- Figur 13: eine weitere Variante eines Laufbandsystems in einer perspektivischen Gesamtansicht zeigt, bei dem die Anzeigeeinrichtung mit einer VR-Brille ausgebildet ist;
- Figuren 14a-14d: ein Laufband gemäß einer weiteren Variante eines Laufbandsystems in einer Querschnittsansicht zeigen, wobei eine Laufbandoberfläche als Oberfläche einer Matte ausgebildet ist; und
- Figuren 15a-b: einen Abschnitt des Laufbandes aus Figur 14a in einer Querschnittsansicht unter Darstellung einer Falte in der Matte zeigen.

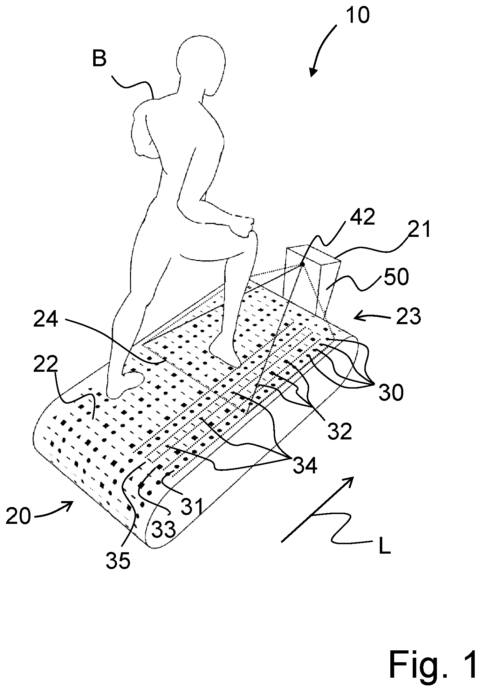

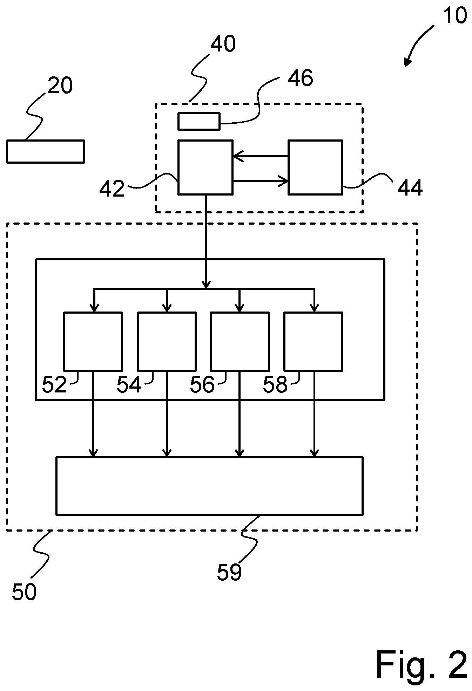

Die Figuren 1 bis 6 zeigen ein Laufbandsystem 10 mit einem Laufband 20 sowie einer Kameraeinrichtung 40 und einer Steuereinrichtung 50, wobei die Kameraeinrichtung 40 und die Steuereinrichtung 50 in dieser Variante in einem gemeinsamen Gehäuse 21 zentriert am längsseitigen Frontende 23 des Laufbandes 20 angeordnet sind. Das Gehäuse 21 kann dabei grundsätzlich vom Laufband 20 mechanisch entkoppelt auf dem Boden stehen. Die Steuereinrichtung 50 kann zum Beispiel als Computer mit Hauptplatine und Prozessor ausgestaltet und signalübertragend mit der Kameraeinrichtung 40 verbunden sein.

Das Laufband 20 ist ein unidirektionales, passiv angetriebenes Laufband 20 mit einer Längsrichtung L. Es umfasst ein zum Umlaufen angeordnetes Endlosband, welches über in der Längsrichtung L vorne und hinten angeordnete Umlenkrollen (nicht gezeigt) umgelenkt wird. Das Endlosband bildet eine zum Betreten durch den Benutzer B vorgesehene Laufbandoberfläche 22 aus. D.h., die Laufbandoberfläche 22 ist diejenige Oberfläche des Laufbandes 20, auf die der Benutzer B tritt und die sich im Bezugssystem der Umgebung des Laufbandes 20 unter den Benutzer B hindurch bewegt.

Auf der Laufbandoberfläche 22 sind optische Markierungen ausgebildet, zu denen erste Markierungen 30, zweite Markierungen 32 und dritte Markierungen 34 gehören. Die ersten Markierungen 30, zweiten Markierungen 32, dritten Markierungen 34 und gegebenenfalls alle übrigen Markierungen dieses Laufbandes 20 sind als Infrarotmarker ausgebildet, die Infrarotstrahlung und/oder sichtbares Licht reflektieren. Die Infrarotstrahlung kann bevorzugt besser/stärker reflektiert werden als sichtbares Licht. Alternativ kann (handelsübliches) reflektierendes Klebeband verwendet werden, das sowohl sichtbares als auch unsichtbares Licht (beispielsweise ähnlich oder gleich stark) reflektiert. In der vorliegenden Variante können die Infrarotmarker in zumindest einem Teil des infraroten Teils des elektromagnetischen Spektrums (ab 690 nm) eine höhere Reflektivität aufweisen als im sichtbaren Teil des elektromagnetischen Spektrums. Die Kameraeinrichtung 40 ist dementsprechend mit mindestens einer Kamera 42 ausgebildet, wobei die Kamera 42 eine Infrarotkamera (optional eine Wärmebildkamera) ist. Die Infrarotkamera kann zur Erfassung von Nahinfrarotstrahlung (NIR), mittlerer Infrarotstrahlung (MIR) und/oder Strahlung des fernen Infrarotspektrums (FIR) eingerichtet sein. Die Kameraeinrichtung 40 ist dazu eingerichtet, eine zeitliche Bildfolge mit mehreren Bildern von mindestens einem Teil 24 der Laufbandoberfläche 22 unter Erfassung der ersten Markierungen 30, zweiten Markierungen 32 sowie dritten Markierungen 34 mittels der Kamera 42 zu gewinnen. Darüber hinaus umfasst die Kameraeinrichtung 40 eine Infrarotleuchte 46 mit mindestens einer Infrarotlichtquelle, die dazu angeordnet ist, mindestens den Teil 24 der Laufbandoberfläche 22 anzustrahlen.

Die ersten Markierungen 30 sind in einer parallel zur Längsrichtung L verlaufenden ersten Reihe angeordnet, die als erste Spur 31 bezeichnet ist und geradlinig verläuft. Die zweiten Markierungen 32 sind in einer parallel zur Längsrichtung L verlaufenden zweiten Reihe angeordnet, die als zweite Spur 33 bezeichnet ist und ebenfalls geradlinig verläuft. Die dritten Markierungen 34 sind in einer parallel zur Längsrichtung L verlaufenden dritten Reihe angeordnet, die als dritte Spur 35 bezeichnet ist und ebenfalls geradlinig verläuft. Insgesamt können auf der Laufbandoberfläche 22 mehrere erste Spuren 31, zweite Spuren 33 und/oder dritte Spuren 35 ausgebildet sein. In der Variante aus Figur 1 sind in einer Querrichtung (senkrecht zur Längsrichtung L), beginnend in Laufrichtung auf der rechten Seite eine erste Spur 31, dann eine zweite Spur 33, eine dritte Spur 35, anschließend wieder eine erste Spur 31, eine zweite Spur 33 und eine dritte Spur 35, usw., vorgesehen. Nachfolgend für die erste Spur 31, zweite Spur 33 beziehungsweise dritte Spur 35 gesagtes gilt entsprechend für jede erste, zweite beziehungsweise dritte Spur 31, 33, 35. Die ersten Markierungen 30, zweiten Markierungen 32 und dritten Markierungen 34 haben unterschiedliche Formen, beispielsweise eine Kreisform, eine Rechteckform beziehungsweise eine Dreiecksform.

In der ersten Spur 31 sind die ersten Markierungen 32 der Längsrichtung L periodisch mit gleichem, ersten Versatz (sogenannter Längsversatz, "Pitch") zwischen benachbarten ersten Markierungen 32 angeordnet. Da alle ersten Markierungen 32 im Wesentlichen gleich groß sind, ist in der ersten Spur 31 auch ein Abstand zwischen benachbarten ersten Markierungen 32 in der ersten Spur 31 überall gleich. Dies gilt entsprechend für die zweite Spur 33 und die dritte Spur 35. D.h., auch in der zweiten Spur 33 beziehungsweise der dritten Spur 35 sind die zweiten beziehungsweise dritten Markierungen 32, 34 in der Längsrichtung L periodisch mit gleichem zweiten beziehungsweise dritten Versatz zwischen benachbarten ersten Markierungen 32 angeordnet. Vorteilhafterweise ist der zweite Versatz dabei größer als, insbesondere doppelt so groß wie, der erste Versatz. Der dritte Versatz zwischen den dritten Markierungen 34 ist wiederum größer als, insbesondere doppelt so groß wie, der zweite Versatz. Dies erlaubt eine präzise Geschwindigkeitsbestimmung über einen relativ großen Geschwindigkeitsbereich mit einer relativ einfachen Kamera 42.

Der Vollständigkeit halber sei angemerkt, dass in Figur 1 zwischen Markierungen der zweiten und dritten Spur 33, 35 Platzhalter in Form von Strichen dargestellt sind, die jedoch nur der graphischen Darstellung dienen und denen bei der Auswertung keine Funktion zukommt. Die unterschiedlichen geometrischen Formen (Dreieck vs. Kreis vs. Quadrat) müssen nicht zwangsweise so zum Einsatz kommen; vielmehr genügen auch gleichförmige (beispielsweise rechteckige) Markierungen.

Die von der Kameraeinrichtung 40 gewonnene zeitliche Bildfolge wird sodann mittels der Steuereinrichtung 50 derart verarbeitet, dass auf Basis der Bildfolge mindestens eine Bewegungsinformation des sich unter Betreten der Laufbandoberfläche 22 auf dem Laufband 20 fortbewegenden Benutzers B ermittelt wird. Wie weiter unten erläutert, kann sodann eine Steuerfunktion auf Basis der Bewegungsinformation(en) ausgeführt werden. Bei der Variante aus Figur 1 werden mehrere Benutzerinformationen ermittelt, nämlich (mittels einer Geschwindigkeitsermittlungseinrichtung 52) eine Fortbewegungsgeschwindigkeit des Benutzers B, die einer Bewegungsgeschwindigkeit der Laufbandoberfläche entspricht, (mittels einer Auftrittsermittlungseinrichtung 54) eine Position und ein Zeitpunkt eines Auftritts des Benutzers B auf die Laufbandoberfläche 22, (mittels einer Fußausrichtungserkennungseinrichtung 56) eine Ausrichtung eines Fußes des Benutzers B zum Zeitpunkt des Auftritts und (mittels einer Benutzererkennungseinrichtung 58) eine Benutzeridentität.

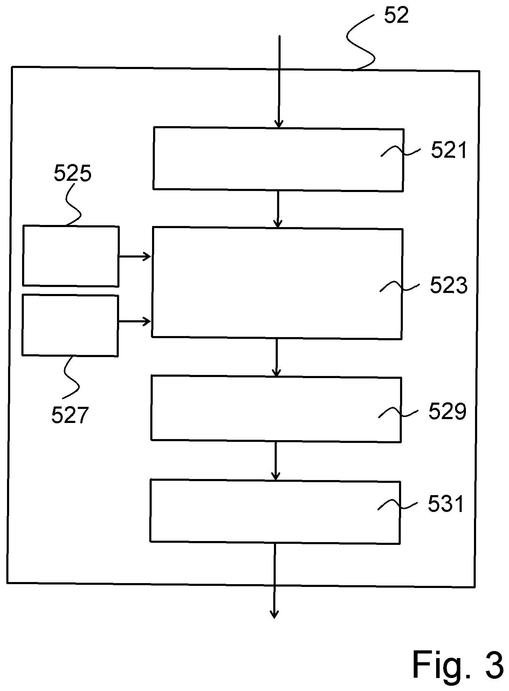

Die Funktionsweise der Geschwindigkeitsermittlungseinrichtung 52 der Steuereinrichtung 50 ist in Figur 3 als Blockschema dargestellt. Die Funktionsweise ist derart ausgestaltet, dass aus der Bildfolge mindestens ein zeitlicher (Reflexions-) Intensitätsverlauf an einer vorbestimmten Stelle auf der Lauffläche, abgetastet mit den mehreren Bildern, ermittelt wird und auf Basis des mindestens einen Intensitätsverlaufs die Fortbewegungsgeschwindigkeit des Benutzers B als Teil der Bewegungsinformation bestimmt wird. Jedes dieser Bilder der Bildfolge kann mittels der Kameraeinrichtung 40 bereits perspektivisch entzerrt (trapezkorrigiert) sein.

In einem Block 521 werden die Bilder der Bildfolge mittels Kantendetektion zu Kantenbildern umgewandelt und die Konturen von den Markierungen entsprechenden Bildobjekten ausgewählt. Durch einen anschließenden Musterabgleich (Block 523) auf Basis von in der Steuereinrichtung 50 abgespeicherten Mustern (Block 525) der ersten, zweiten und dritten Markierungen 30, 32, 34 und/oder Informationen über den ersten, zweiten und dritten Versatz (Block 527) können die ersten, zweiten und dritten Markierungen 30, 32 und 34 (beziehungsweise deren zugehörigen Bildobjekte) in den Bildern erkannt werden.

In Block 529 erfolgt sodann die eigentliche Berechnung der Fortbewegungsgeschwindigkeit. Zu diesem Zweck kann aus der Bildfolge für jede der ersten, zweiten und dritten Spuren 31, 33, 35 ein zugehöriger zeitlicher Intensitätsverlauf bestimmt werden. Dabei wird an einer vorbestimmten Stelle (Bildpunkt definiert durch seine x- und y- Koordinaten im jeweiligen Bild) pro Spur ein Verlauf des Bildwertes über die Zeit ermittelt. Die Zeitkomponente kann dabei via Software bzw. Taktung eines Prozessors der Steuereinrichtung 50 oder alternativ aus einer Abtastrate der Kamera 42 bestimmt werden. Im Ergebnis zeichnet sich beispielsweise ein Intensitätsverlauf für die erste Spur 31 durch separate lokale Maxima (Peaks) aus, die umso weiter voneinander beabstandet sind, je geringer die Fortbewegungsgeschwindigkeit ist. Dies gilt entsprechend für die zweite Spur 33 und die dritte Spur 35.

Alternativ können in den Blöcken 521 bis 529 aus den Bildern der Bildfolge mittels Schwellwert-Operationen und einer Binärkonvertierung schwarz-weiß Bilder generiert werden, aus denen die Markierungen hervorstechen. Anhand der Pixelwerte in bestimmten Regionen und der vergangen Zeit zwischen zwei Bildern werden Geschwindigkeitsinformationen errechnet. Es wird in diesem Fall kein Musterabgleich benötigt.

Vorteilhafterweise ist die Geschwindigkeitsermittlungseinrichtung 52 dazu ausgelegt, die erste Spur 31 für die Ermittlung vergleichsweise niedriger Fortbewegungsgeschwindigkeiten und die dritte Spur 35 für die Ermittlung höherer Fortbewegungsgeschwindigkeiten zu verwenden. Die zweite Spur 33 wird vorzugsweise für die Ermittlung von Fortbewegungsgeschwindigkeiten in einem Wertebereich zwischen den niedrigen Fortbewegungsgeschwindigkeiten und den hohen Fortbewegungsgeschwindigkeiten verwendet. Insbesondere kann die Geschwindigkeitsermittlungseinrichtung dazu ausgelegt sein, beginnend beim Stillstand des Laufbandes die Fortbewegungsgeschwindigkeiten des Benutzers auf Basis der ersten Spur 31 zu bestimmen. Sobald diese bestimmte Fortbewegungsgeschwindigkeit einen vorbestimmten ersten Schwellenwert (beispielsweise 1 m/s oder 2 m/s) übersteigt, kann die Geschwindigkeitsermittlungseinrichtung 52 dazu eingerichtet sein, die Fortbewegungsgeschwindigkeit auf Basis der zweiten Spur 33 zu ermitteln. Wenn die ermittelte Fortbewegungsgeschwindigkeit einen weiteren vorbestimmten, zweiten Schwellenwert (beispielsweise 3 m/s oder 5 m/s) übersteigt, der größer ist als der erste Schwellenwert, der Benutzer B also z.B. beginnt zu laufen, kann die Geschwindigkeitsermittlungseinrichtung 52 dazu eingerichtet sein, die Fortbewegungsgeschwindigkeit auf Basis der dritten Spur 35 zu ermitteln. Bei Verringerung der Fortbewegungsgeschwindigkeiten unter den zweiten beziehungsweise ersten Schwellenwert kann die Geschwindigkeitsermittlungseinrichtung 52 entsprechend dazu ausgelegt sein, weder zur Ermittlung der Fortbewegungsgeschwindigkeiten auf Basis der zweiten Spur 33 beziehungsweise ersten Spur 31 zurückzukehren. Dies ermöglicht eine präzise Geschwindigkeitsermittlung unter Verwendung kostengünstiger technischer Mittel. Die ermittelte Fortbewegungsgeschwindigkeit kann in jedem Fall in Block 531 zur Ausführung der Steuerfunktion verwendet werden.

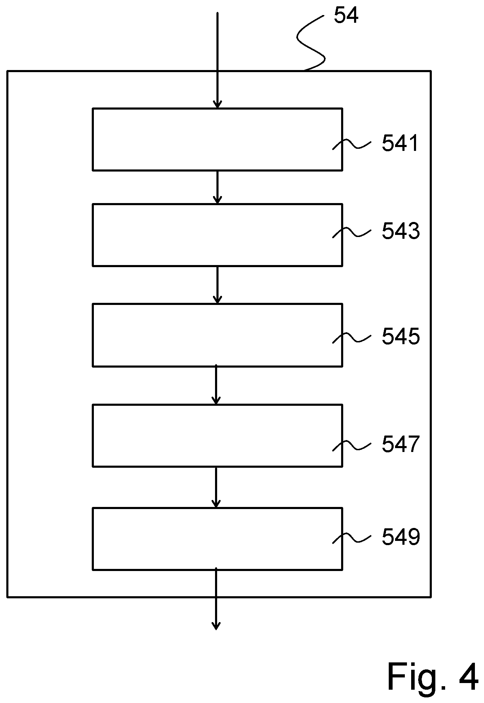

Die Funktionsweise der Auftrittsermittlungseinrichtung 54 der Steuereinrichtung 50 ist in Figur 4 als Blockschema dargestellt. Auch hierbei sowie bei der unten erläuterten Fußausrichtungserkennungseinrichtung 56 und der Benutzererkennungseinrichtung 58 können die Bilder der Bildfolge mittels der Kameraeinrichtung 40 bereits perspektivisch entzerrt (trapezkorrigiert) sein. In einem Block 541 werden die Bilder der Bildfolge analog zu Block 521 mittels Kantendetektion zu Kantenbildern umgewandelt und die Konturen von den Markierungen entsprechenden Bildobjekten ausgewählt. Sodann sieht Block 543 vor, in mindestens einem ersten Bild, einem zweiten Bild und einem dritten Bild von den mehreren Bildern (Kantenbildern) jeweils ein Bildobjekt mit der größten Fläche und/oder Kontur zu ermitteln. Wenn nämlich der Erfassungsbereich der Kamera 42 auf den Teil 24 der Laufbandoberfläche 22 beschränkt ist, also ausschließlich die Laufbandoberfläche 22 erfasst wird, kann davon ausgegangen werden, dass dieses Bildobjekt ein (bekleideter oder unbekleideter) Fuß des Benutzers B ist.

In Block 545 wird sodann auf Basis einer ersten Position des Bildobjekts im ersten Bild und einer zweiten Position des Bildobjekts im zweiten Bild eine erste Bewegungsrichtung des Fußes des Benutzers B bestimmt. Vor dem Auftreten ist diese Bewegungsrichtung in Längsrichtung L vorwärts auf die Kamera 42 zu gerichtet. In der Bildfolge stellt sich diese Bewegung als Verlagerung des Bildobjekts in Richtung unten dar. Im selben Block wird ferner auf Basis der zweiten Position des Bildobjekts im zweiten Bild und einer dritten Position des Bildobjekts im dritten Bild eine zweite Bewegungsrichtung des Fußes des Benutzers B bestimmt. Wenn das zweite Bild einen Zustand vor dem Auftreten darstellt, gilt oben für die erste Bewegungsrichtung gesagtes entsprechend auch für die zweite Bewegungsrichtung (beziehungsweise die Darstellung in den Bildern). Wenn das zweite Bild hingegen (im Wesentlichen) den Zeitpunkt des Auftritts abbildet, ändert sich die Bewegungsrichtung des Fußes deutlich, d.h., die zweite Bewegungsrichtung unterscheidet sich von der ersten Bewegungsrichtung. Dies wird in Block 547 ausgenutzt, indem der Auftritt des Benutzers B auf die Laufbandoberfläche 22 festgestellt wird, wenn ein Winkel zwischen der ersten Bewegungsrichtung und der zweiten Bewegungsrichtung einen vorbestimmten Winkel-Schwellenwert übertrifft. Dieser Winkel kann vorzugsweise mindestens 45°, mindestens 90° oder mindestens 135° betragen. Höchstvorzugsweise beträgt der Winkel zwischen 160° und 180°. Für den Auftritt charakteristische Informationen (beispielsweise der Auftrittsort und/oder der Zeitpunkt des Auftritts) können im Block 549 zur Ausführung der Steuerfunktion bereitgestellt und/oder ausgegeben werden. Der Winkel muss hierzu nicht zwangsweise ermittelt oder mit dem Winkel-Schwellenwert verglichen werden. Vielmehr kann die Steuereinrichtung 50 beispielsweise erkennen, dass dieses Kriterium erfüllt ist, wenn sich eine Y-Koordinate des Bildobjekts von dem ersten Bild zum zweiten Bild in eine andere Richtung ändert (beispielsweise verringert) als von dem zweiten Bild zum dritten Bild (wobei die Y-Koordinate in letzterem Fall wieder ansteigt).

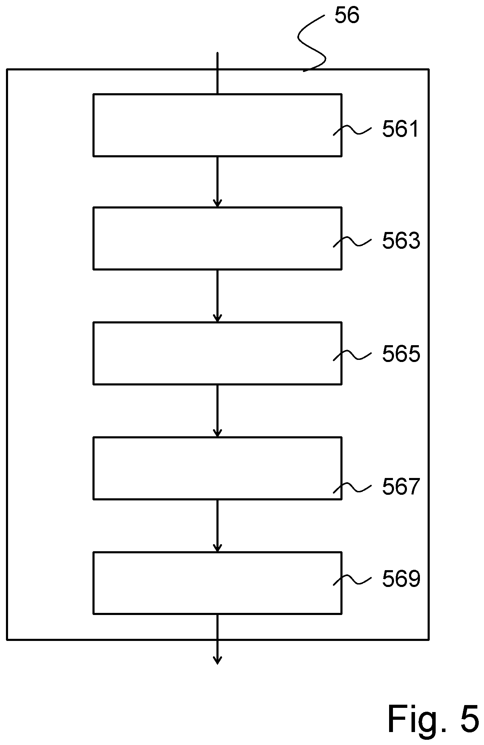

Die Figur 5 zeigt die Funktionsweise der Fußausrichtungserkennungseinrichtung 56 der Steuereinrichtung 50 als Blockschema. Die Fußerkennung aus den Blöcken 541 und 543 kommt auch hier zur Anwendung, sodass der Block 561 dem Block 541 und der Block 563 dem Block 543 entspricht. Im nächsten Block 565 ermittelt die Fußausrichtungserkennungseinrichtung 56 in dem zweiten Bild ein minimal umschreibendes Rechteck für das Bildobjekt sowie im Block 567 Informationen über eine Ausrichtung dieses Rechtecks (allgemeiner Vielecks) relativ zu einer Referenzrichtung des Laufbandes, insbesondere der Längsrichtung der Laufbandoberfläche. Dies kann enthalten, eine Haupterstreckungsrichtung (Längsrichtung) des minimal umschreibenden Rechtecks sowie einen Zwischenwinkel zwischen der Haupterstreckungsrichtung und der Längsrichtung L der Laufbandoberfläche zu ermitteln. Sodann können im Block 569 die Informationen über die Ausrichtung und/oder die Haupterstreckungsrichtung zur Ausführung der Steuerfunktion als Teil der Bewegungsinformation bereitgestellt und/oder ausgegeben werden.

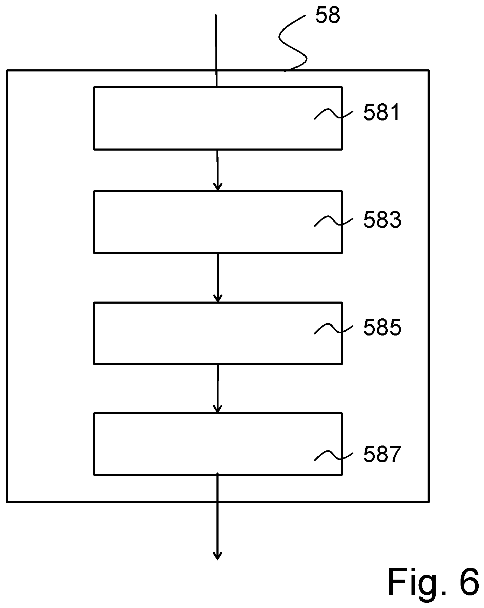

In der Figur 6 ist die Funktionsweise der Benutzererkennungseinrichtung 58 der Steuereinrichtung 50 als Blockschema dargestellt. Die Fußerkennung aus den Blöcken 541 und 543 kommt auch hier zur Anwendung, sodass der Block 581 dem Block 541 und der Block 583 dem Block 543 entspricht. Im anschließenden Block 585 gewinnt die Benutzererkennungseinrichtung 58 die im Bildobjekt zugehörigen Konturpunkte und bestimmt vorzugsweise auf deren Grundlage sowie unter Verwendung von Daten aus einer Benutzerdatenbank die Benutzeridentität. Es wird angemerkt, dass der Begriff Benutzeridentität hierbei nicht zwangsweise Rückschlüsse auf die Person, die das Laufband 20 benutzt, zulässt (etwa, wenn verschiedene Benutzer dieselben Schuhe bei Verwendung des Laufbandes 20 tragen) und auch nicht zulassen muss. Vielmehr reicht beispielsweise die Erkennung von Benutzer Nr. 1, Nr. 2, etc.. Anschließend kann im Block 587 die Benutzeridentität zur Ausführung der Steuerfunktion als Teil der Bewegungsinformation bereitgestellt und/oder ausgegeben werden. Beispielsweise kann dabei auf Basis der erkannten Benutzeridentität (insbesondere der Schuhe) selbst bei unterschiedlichen Personen das gleiche Nutzungsprofil (z.B. eine Laufumgebung oder eine Yoga-Umgebung) ausgewählt werden. Mit anderen Worten kann zum Beispiel die Laufumgebung angezeigt werden, wenn eine Benutzeridentität erkannt worden ist, die einem Läuferprofil entspricht, und/oder die Yoga-Umgebung angezeigt werden, wenn eine Benutzeridentität erkannt worden ist, die einem Yogi / einer Yogini entspricht.

In der vorstehend beschriebenen Variante sind die Blöcke 541, 543 beziehungsweise 561, 563 beziehungsweise 581, 583 als Teil der Auftrittsermittlungseinrichtung, Fußausrichtungserkennungseinrichtung 56 beziehungsweise Benutzererkennungseinrichtung 58 beschrieben. Ohne Beschränkung der Allgemeinheit können diese gemeinsamen Funktionsteile hingegen logisch vorgeschaltet und außerhalb der genannten Einrichtungen vorgesehen sein. Die Geschwindigkeitsermittlungseinrichtung 52, die Auftrittsermittlungseinrichtung 54, die Fußausrichtungserkennungseinrichtung 56 und die Benutzerkennungseinrichtung 58 können derart in der Steuereinrichtung 50 integriert sein, dass diese Einrichtungen lediglich logisch als funktionelle Elemente zu verstehen sind, jedoch nicht zwangsweise in gesonderten körperlichen Elementen der Steuereinrichtung 50 realisiert sein müssen.

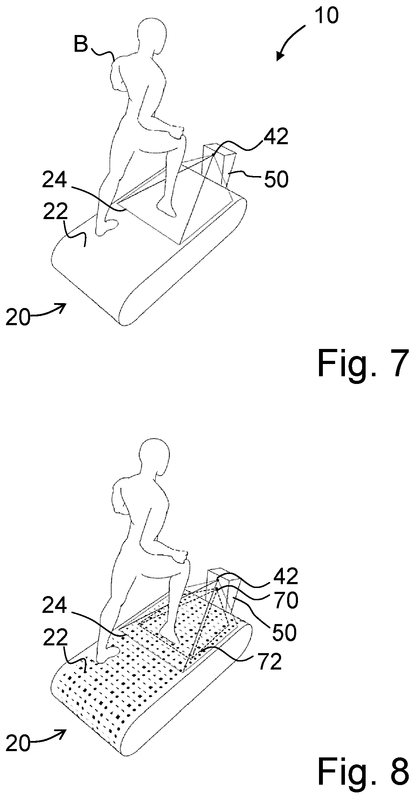

Eine in Figur 7 gezeigte weitere Variante eines Laufbandsystems 10 unterscheidet sich dadurch von dem Laufbandsystem 10 aus Figur 1, dass auf der Laufbandoberfläche 22 keine der optischen Markierungen (erste optische Markierungen 30, zweite optische Markierungen 32, dritte optische Markierungen 34) ausgebildet sind. Dementsprechend fehlt bei diesem Laufbandsystem 10 die Geschwindigkeitsermittlungseinrichtung 52, welche auf der Präsenz der optischen Markierungen beruht. Im Übrigen entspricht das Laufbandsystem 10 aus Figur 7 dem Laufbandsystem 10 aus Figur 1.

Ein weiteres, in Figur 8 gezeigtes Laufbandsystem 10 unterscheidet sich dadurch von dem Laufbandsystem 10 aus Figur 1, dass es zusätzlich eine Anzeigeeinrichtung 70 aufweist und die Steuerfunktion umfasst, die Anzeigeeinrichtung 70 anzusteuern, die Bewegungsinformation(en) anzuzeigen. Zusätzlich sind ein Speicher 90 zum Abspeichern der Bewegungsinformation(en) und/oder eine Kommunikationseinheit 92 zum Versenden der Bewegungsinformation(en) vorgesehen.

Die Anzeigeeinrichtung 70 weist eine Projektionseinrichtung (sogenannter Projektor) auf, die dazu angeordnet ist, die wie vorstehend beschrieben ermittelten Bewegungsinformationen auf den Teil 24 der Laufbandoberfläche 22, zu projizieren. Wie in Figur 8 dargestellt, projiziert die Projektionseinrichtung ein Anzeigebild 72 in einen mit dem Erfassungsbereich der Kameraeinrichtung 40 registrierten Teilbereich (sog. Projektionsfläche) des Teils 24 der Laufbandoberfläche 22 und somit auf einen Teil der (im Umgebungsbezugssystem stationären) Lauffläche des Laufbandes 20. Um trotz dieser Überlappung zwischen Erfassungsbereich und Projektionsfläche die Funktionsweise von Kameraeinrichtung 40 und Steuereinrichtung 50 nicht zu stören, arbeiten die Kameraeinrichtung 40 und die Projektionseinrichtung der Anzeigeeinrichtung 70 mit elektromagnetischer Strahlung unterschiedlicher Spektralbereiche, nämlich die Kamera 40 mit Infrarotstrahlung und die Anzeigeeinrichtung 70 mit sichtbarem Licht. Die Kamera 42 ist entsprechend mit einem auf einer optischen Achse der Kamera 42 angeordneten, sichtbares Licht um mindestens 80% oder mindestens 50% abschwächenden (d.h., für sichtbares Licht undurchlässigen) optischen Filter versehen.

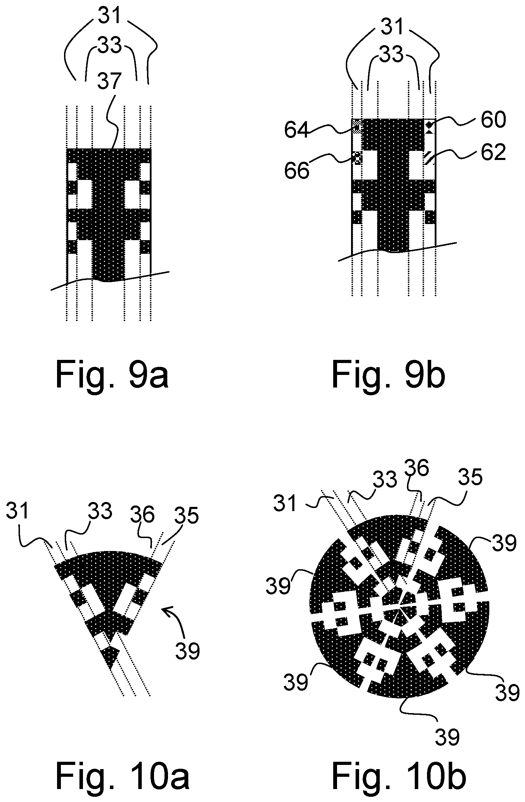

Die Anordnung der optischen Markierungen entspricht bei dieser Variante wie in Figur 8 dargestellt der Anordnung der optischen Markierungen bei dem Laufband 20 aus Figur 1. In einer in Figur 9a gezeigten Modifikation des Laufbandsystems 10 können sich die Markierungen hingegen lediglich durch deren Länge parallel zur Längsrichtung, nicht jedoch durch deren Form unterscheiden. In der Variante aus Figur 9a sind daher alle ersten, zweiten und dritten Markierungen 30, 32, 34 rechteckig. Die ersten Markierungen 30 sind gleich groß und die zweiten Markierungen 32 sind ebenfalls gleich groß, wobei die ersten Markierungen 30 jeweils kleiner als die zweiten Markierungen 32 sind. Die dritten Markierungen 34 sind nicht vorgesehen und die Spuren 31, 32 sind liniensymmetrisch bezüglich einer Mittellängsachse der Lauffläche angeordnet, wobei die ersten Spuren 31 am äußersten Seitenrand des Laufbandes 20 angeordnet sind. Darüber hinaus ist auf der Laufbandoberfläche 22 ein einfarbiger mittiger Streifen 37 ausgebildet, der als Hintergrund für die Füße des Benutzers B dienen kann. Der mittige Streifen 37 ist vorzugsweise mindestens 20 cm, mindestens 30 cm, mindestens 40 cm oder mindestens 50 cm breit und verläuft vorzugsweise parallel zur Längsrichtung L des Laufbandes 20. Dabei gilt: Je breiter der mittige Streifen 37 ist, desto mehr laterale Fuß-Bewegungsfreiheit hat der Benutzer zur Verfügung, ohne dass die Fußerkennung verschlechtert wird.

In einer auf der Modifikation aus Figur 9a basierenden weiteren Modifikation des Laufbandsystems 10 aus Figur 9b ist vorgesehen, dass beiderseits des mittigen Streifens 37 jeweils zwei erste Markierungen 30 als Referenzmarker 60, 62 sowie 64, 66 ausgestaltet sind. Diese Referenzmarker 60, 62, 64, 66 enthalten ein für den jeweiligen Referenzmarker 60, 62, 64, 66 spezifisches Muster. Die Referenzmarker 60, 62, 64, 66 unterscheiden sich somit untereinander und von allen anderen optischen Markierungen auf dem Laufband 20. Die Referenzmarker 60, 62, 64, 66 sind an Ecken eines gedachten Rechtecks auf der Laufbandoberfläche 22 angeordnet. Die Kameraeinrichtung ist dazu ausgelegt, die mehreren Bilder der zeitlichen Bildfolge auf Basis der Referenzmarker 60, 62, 64, 66 perspektivisch zu entzerren, sodass in den Bildern der Bildfolge der ersten und zweiten Spuren 31, 33 entsprechende Bereiche parallel zueinander verlaufen.

Bei zwei auf der Modifikation aus Figur 9a basierenden weiteren Modifikationen von Laufbandsystemen 10 aus den Figuren 10a und 10b sind eine bzw. mehrere dritte Spur(en) 35 sowie vierte Spur(en) 36 vorgesehen, die parallel zueinander jedoch quer zur ersten und zweiten Spur 31, 33 verlaufen. Die Laufbänder 20 dieser beiden Laufbandsysteme 10 sind bevorzugt omnidirektionale Laufbänder 20. In der Modifikation aus Figur 10b sind die ersten, zweiten, dritten und vierten Spuren 31, 33, 35, 36 jeweils zu einer kreissegmentförmigen Spurgruppe 39 gruppiert. Auf der Laufbandoberfläche 22 sind mehrere derartige kreissegmentförmige Spurgruppen 39 zusammengefügt, um zusammen einen Kreis mit optischen Markierungen auszubilden.

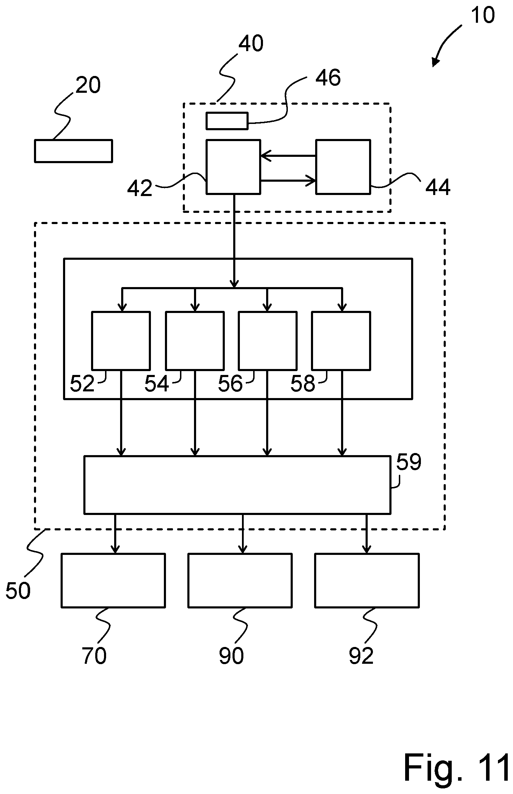

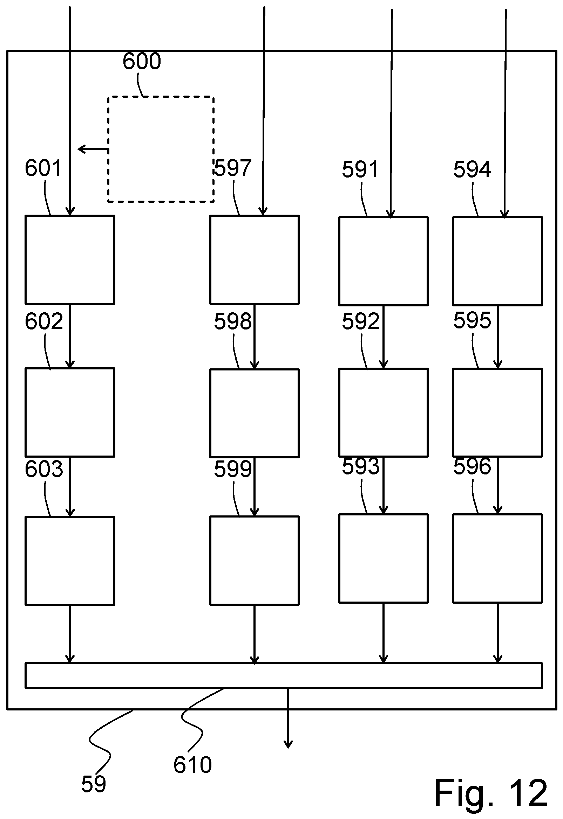

Im Folgenden wird die Funktionsweise der Anzeigeeinrichtung 70 des Laufbandsystems 10 aus Figur 8 unter Bezugnahme auf die Figuren 8, 11 und 12 beschrieben. Da die Laufbandsysteme 10 gemäß den Modifikationen aus den Figuren 9a bis 10b alle Merkmale des Laufbandsystems 10 aus Figur 8 aufweisen, gilt nachfolgende Beschreibung auch für die genannten Modifikationen.

Die Anzeigeeinrichtung 70 dient der visuellen Rückkopplung der ermittelten Bewegungsinformationen und kann darauf abzielen, den Benutzer B zu veranlassen, seine Bewegungsabläufe auf bestimmte Art und Weise anzupassen. Zu diesem Zweck kann die Steuereinrichtung 50 eine Anzeigesteuerung 59 enthalten, in der die Steuerfunktion ausgeführt wird. Die Steuerfunktion enthält, die Anzeigebilder jeweils wie folgt zu bilden. Hinsichtlich der Fortbewegungsgeschwindigkeit des Benutzers wird vorliegend eine mit den Anzeigebildern angezeigte virtuelle Laufumgebung mit Hindernissen auf dem Boden gemäß der Fortbewegungsgeschwindigkeit, also mit der Bewegung der Laufbandoberfläche 22 synchronisiert, über die Projektionsfläche bewegt. Im Block 591 wird hierzu die Fortbewegungsgeschwindigkeit erhalten. Im Block 592 wird die Fortbewegungsgeschwindigkeit verwendet, um einen Bewegungsgeschwindigkeit der virtuellen Umgebung/des Hindernisses über die Projektionsfläche mit der Bewegung der Laufbandoberfläche 22 zu synchronisieren. Schließlich wird das resultierende Anzeigebild im Block 593 an die Anzeigeeinrichtung 70 ausgegeben, um angezeigt zu werden.

Auf Basis der Haupterstreckungsrichtung des minimal umschreibenden Vielecks/Rechtecks wird die Steuerung der Bewegungsrichtung durch die virtuelle Laufumgebung realisiert. Hierzu wird in einem Block 594 die entsprechende Bewegungsinformation wie oben erläutert erhalten. Im Block 595 wird die virtuelle Bewegung des Benutzers gesteuert, um im Block 596 das resultierende Anzeigebild an die Projektionseinrichtung auszugeben. Auf ähnliche Weise wird die Position der Kontur des dem Fuß entsprechenden Bildobjekts in das Anzeigebild übernommen. Hierzu sieht Block 597 vor, die entsprechenden Daten zu erhalten; Block 598 realisiert das Einfügen des Bildobjekts in das Anzeigebild an derselben Stelle wie im zweiten Bild; und Block 599 sieht wiederum vor, das resultierende Anzeigebild an die Projektionseinrichtung auszugeben.

In dem Block 601 wird im Hinblick auf die Schritterkennung die Bewegungsinformation der Auftrittsermittlungseinrichtung 54 erhalten. In diesem Zusammenhang kann in Block 600 eine gesonderte Initialisierung erfolgen. Anschließend ist in Block 602 vorgesehen, dass ein Kollisionsereignis mit einem virtuellen Objekt bestimmt wird. In Block 603 wird das hieraus resultierende Anzeigebild an die Projektionseinrichtung ausgegeben, um angezeigt zu werden. Das Anzeigebild kann in diesem Fall eine Überlagerung des Bildobjekts mit dem Hindernis sowie optional zusätzlich eine gesonderte Grafik als Hinweis auf die Kollision (beispielsweise ein Ausrufezeichen) enthalten. Die Anzeigesteuerung 59 sieht sodann im Block 610 vor, die Anzeigeeinrichtung 70 anzusteuern, das Anzeigebild anzuzeigen.

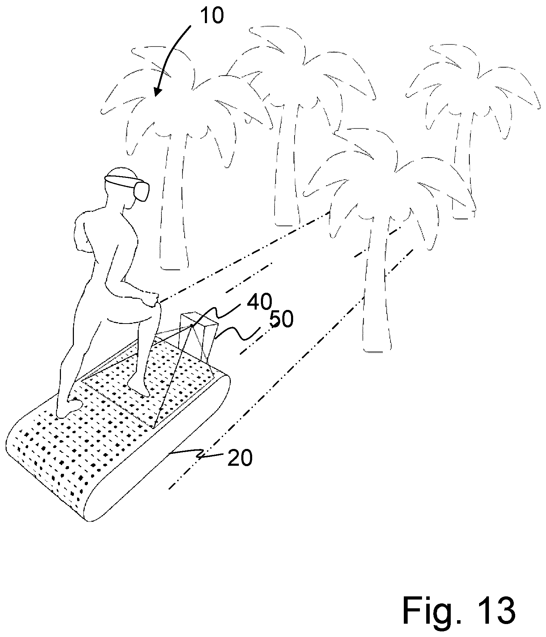

Bei einem in Figur 13 schematisch dargestellten weiteren Laufbandsystem 10 ist die Anzeigeeinrichtung 70 mit einer VR-Brille anstatt der Projektionseinrichtung ausgebildet. Somit gilt oben für die Projektionseinrichtung gesagtes für die VR-Brille entsprechend. Im Übrigen enthält das Laufbandsystem 10 aus Figur 13 sämtliche Merkmale des Laufbandsystems 10 aus Figur 8. Insbesondere können an den Stellen, an der die Füße ermittelt worden sind, dann auch virtuelle Füße in der 3D-Welt erscheinen, so dass der Benutzer nicht vom Laufband fällt, wenn er/sie aufgrund des Fehlens der Füße aus der Immersion gerissen werden würde.

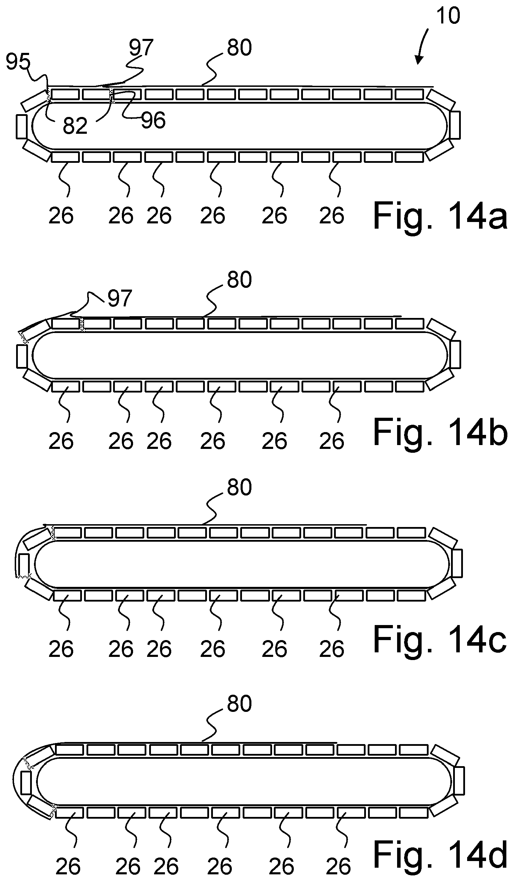

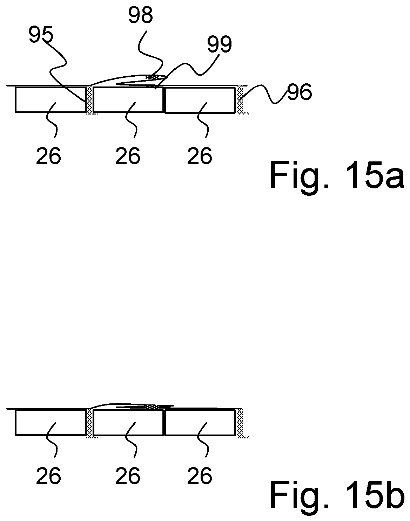

Ein weiteres Laufbandsystem 10, dessen Laufband 20 als Lamellen-basiertes Laufband (sog. Lamellenlaufband) ausgebildet und in den Figuren 14a-d und 15a-b in einer Mittellängsschnittsansicht dargestellt ist, unterscheidet sich dadurch von dem Laufbandsystem 10 aus Figur 8, dass die Laufbandoberfläche 22 eine Oberseite einer Matte 80 ist, welche mittels einer fest mit der Matte 80 verbundenen Befestigungsvorrichtung 82 an Lamellen 26 des Laufbandes 20 befestigt werden kann und bei Bedarf (beispielsweise zum Waschen oder vollständigen Auswechseln der Matte 80) zerstörungsfrei reversibel vom Laufband 20 abgenommen werden kann. Diese Matte 80 mit der Befestigungsvorrichtung 82 ermöglicht, das Laufbandsystem 10 vergleichsweise leicht aus einem nicht gesondert dargestellten Bausatz zusammenzufügen.

Die Matte 80 ist hier beispielhaft als Textilmatte, insbesondere Teppich, ausgebildet (vereinfacht "Infrarot-Laufteppich"). An einer der Laufbandoberfläche 22 entgegengesetzten Unterseite ist die Matte 80 an einem ihrer kurzen Ränder 94 mit zwei Winkelleisten 95, 96 verklebt. Jede der beiden Winkelleisten 95, 96 kann bei dem Lamellen-basierten Laufband 20 jeweils unterhalb einer bestimmten Lamelle 26 eingehängt werden, so dass sich die Matte 80 durch Vorwärtsbewegung des Laufbandes 20 gleichmäßig und gerade über das Laufband 20 zieht.

Das Material der Matte 80 zwischen den beiden Winkelleisten 95, 96 ist länger als ein Abstand zwischen den beiden bestimmten Lamellen 26. Dies bewirkt, dass die Matte 80 zwar eine kleine Falte 97 schlägt, wenn die beiden bestimmten Lamellen im 90° Winkel zum Benutzer B stehen. Es verbessert sich jedoch der Umlenkvorgang der Matte 80 über die Umlenkrollen, weil sich dabei ein Abstand zwischen den Lamellen 26 vergrößert. Die Falte 97 bildet dabei Puffermaterial, welches benötigt wird, damit die Matte 80 (der Teppich) durch den sich an den Längseden des Laufbandes 20 kurzzeitig vergrößernden Lamellenabstand nicht unter Spannung gerät und somit den Lauf des Laufbandes 20 behindern würde.

Damit die Falte 97 für den Benutzer B möglichst wenig störend ist, kann das Material der Matte 80 an der Stelle der Falte 97 dünner und/oder elastischer sein als am Rest der Matte 80. Zusätzlich kann wie in den Figuren 15a und 15b gezeigt an der Innenseite des Knicks der Falte 97 eine beschwerende Magnetschiene 98 verklebt sein, die die Falte 97 zunächst aufgrund der Gravitation und zusätzlich per Magnetkraft mittels eines Gegenmagnets 99 an die Lamelle 26 bringt. Die Magnetschiene 98 sowie der Magnet 99 können hinsichtlich der Größe an den Laufbandtyp und Lamellenabstand angepasst sein, sodass sich eine magnetische Verbindung zwischen ihnen beim Umlenkvorgang hinreichend leicht löst. Mit entsprechend gekürztem aber ausreichend elastischem Material kann eine Faltenbildung vermieden werden.

Die Matte 80 selbst besteht bevorzugt aus zwei verschiedenen Lagen, nämlich eine untere Lage ("Unterlage"), die als eine gummierte Anti-Rutsch-Netzstruktur (wie eine Tischdeckenunterlage) gebildet ist, und eine obere Lage ("Oberlage"), die mit der unteren Lage verklebt ist und aus einem (im Rahmen der reduzierten Geräuschentwicklung und notwendigen Biegefähigkeit) frei wählbaren Material gebildet ist, mit dem unterschiedliche Lauferlebnisse simuliert oder unterschiedliche Projektionseffekte erzielt werden. Beispielsweise kann beim Barfußbetrieb eine raue Oberlage massierend auf die Füße wirken, während eine gummiartige Oberlage ein weicheres Tritterlebnis schafft. Steht das Tritterlebnis nicht im Fokus, sondern eher die Qualität der optischen Projektion, kann ein entsprechender gut projizierender Leinwandstoff als Oberlage zum Einsatz kommen.

Neben einem gesteigerten Erlebnis bei Barfußbetrieb oder Projektion sowie der Möglichkeit die Lauffläche bei Verschmutzung zu wechseln (und somit das Laufband selbst vor Verschmutzung zu schützen), kann die wechselbare Lauffläche der Matte 80 insbesondere die technisch störungsfreie Erkennung der Füße über die Infrarotkamera ermöglichen. Hierzu sind die oben beschriebenen Markierungen auf die Oberlage aufgesprüht und können für die Kamera wie eine Art Codierung zur Messung der Geschwindigkeit des Bandes als Referenz genutzt werden.

Im Übrigen enthält das Laufbandsystem 10 aus den Figuren 14a-d und 15a-b alle Merkmale des Laufbandsystems 10 aus Figur 8.

Die in dieser Offenbarung verwendeten Begriffe "umfassend", "aufweisend", "mit" und Ähnliche sind als nicht abschließend zu verstehen. Insbesondere bedeutet der Begriff "umfassend ein/e" in diesem Kontext "umfassend mindestens ein/e", d.h. "umfassend ein/e" schließt nicht aus, dass weitere entsprechende Elemente vorhanden sind. Mindestens ein/e bedeutet vorliegend ein/e oder mehrere. D.h., die Steuereinrichtung kann beispielsweise eine oder mehrere Bewegungsinformationen ermitteln. Aus Gründen der Leserlichkeit ist in dieser Offenbarung vereinfachend der Ausdruck "mindestens" teilweise weggelassen. Sofern ein Merkmal der vorliegenden Offenbarung in der Einzahl bzw. unbestimmt beschrieben ist, soll gleichzeitig auch seine Mehrzahl mit offenbart sein. Zumindest abschnittsweise/teilweise ist als abschnittsweise/teilweise oder vollständig zu verstehen.

## Patentansprüche

1. Bausatz, umfassend
eine Matte (80) mit einer Befestigungsvorrichtung (82), mittels der die Matte (80) zerstörungsfrei reversibel an Lamellen (26) eines Laufbandes (20) anbringbar ist, so dass eine Oberfläche der Matte (80) eine Laufbandoberfläche (22) des Laufbandes (20) ausbildet, wobei auf der Laufbandoberfläche (22) optische Markierungen (30, 32, 34) ausgebildet sind,
eine Kameraeinrichtung (40) mit mindestens einer Kamera (42), wobei die Kameraeinrichtung (40) dazu eingerichtet ist, eine zeitliche Bildfolge mit mehreren Bildern von mindestens einem Teil (24) der Laufbandoberfläche (22) unter Erfassung der Markierungen (30, 32, 34) zu gewinnen, und
eine Steuereinrichtung (50), die dazu eingerichtet ist,
die Bildfolge von der Kameraeinrichtung (40) zu erhalten,
auf Basis der Bildfolge mindestens eine Bewegungsinformation des sich unter Betreten der Laufbandoberfläche (22) auf dem Laufband (20) fortbewegenden Benutzers (B) zu ermitteln, und
eine Steuerfunktion auf Basis der Bewegungsinformation auszuführen,
wobei die Markierungen (30, 32, 34) als Infrarotmarker und die Kamera (42) als Infrarotkamera ausgebildet sind, und
wobei die Infrarotmarker Reflexionsmarker sind.

## Claims

1. Kit, comprising:
a mat (80) having a fastening device (82), by means of which the mat (80) can be attached non-destructively and reversibly to slats (26) of a treadmill (20), such that a surface of the mat (80) forms a treadmill surface (22) of the treadmill (20), wherein optical markings (30, 32, 34) are formed on the treadmill surface (22),
a camera device (40) having at least one camera (42), wherein the camera device (40) is configured to acquire a time sequence of a plurality of images of at least a portion (24) of the treadmill surface (22), capturing the markings (30, 32, 34), and
a control device (50), configured to:
receive the image sequence from the camera device (40),
determine, on the basis of the image sequence, at least one item of movement information of a user (B) moving on the treadmill (20) while stepping on the treadmill surface (22), and
perform a control function on the basis of the movement information,
wherein the markings (30, 32, 34) are formed as infrared markers and the camera (42) is formed as an infrared camera, and
wherein the infrared markers are reflection markers.

## Revendications

1. Kit, comprenant
une natte (80) munie d'un dispositif de fixation (82), au moyen duquel la natte (80) peut être fixée de manière réversible et non destructive à des lamelles (26) d'un tapis roulant (20), de sorte qu'une surface de la natte (80) forme une surface de tapis roulant (22) du tapis roulant (20), des repères optiques (30, 32, 34) étant formés sur la surface de tapis roulant (22),
un dispositif de caméra (40) comportant au moins une caméra (42), le dispositif de caméra (40) étant configuré pour acquérir une séquence temporelle comprenant plusieurs images d'au moins une partie (24) de la surface de tapis roulant (22) en saisissant les repères (30, 32, 34), et
un dispositif de commande (50), configuré pour
recevoir la séquence d'images en provenance du dispositif de caméra (40),
déterminer, sur la base de la séquence d'images, au moins une information de mouvement d'un utilisateur (B) se déplaçant sur le tapis roulant (20) en foulant la surface de tapis roulant (22), et
exécuter une fonction de commande sur la base de l'information de mouvement,
les repères (30, 32, 34) étant réalisés sous la forme de marqueurs infrarouges et la caméra (42) étant réalisée sous la forme d'une caméra infrarouge, et
les marqueurs infrarouges étant des marqueurs réfléchissants.
